# EUROPÄISCHE PATENTSCHRIFT

(11) **EP 1 029 256 B1**
(45) Veröffentlichungstag und Bekanntmachung des Hinweises auf die Patenterteilung: **15.01.2003**
(21) Anmeldenummer: 98965138.5
(22) Anmeldetag: 22.10.1998
(51) Int. Cl.: G02F 1/161

(54) **ELEKTROCHROMES SYSTEM**
ELECTROCHROMIC SYSTEM
SYSTEME ELECTROCHROME

(30) Priorität: 03.11.1997 DE 19748358
(43) Veröffentlichungstag der Anmeldung: 23.08.2000
(73) Patentinhaber: Bayer Aktiengesellschaft, 51368 Leverkusen (DE)
(72) Erfinder: BERNETH, Horst, D-51373 Leverkusen (DE); HEUER, Helmut-Werner, D-47829 Krefeld (DE)
(86) Internationale Anmeldenummer: EP9806721
(87) Internationale Veröffentlichungsnummer: WO99023528

(56) Entgegenhaltungen:
- EP-A- 0 240 226
- US-A- 4 227 779
- PATENT ABSTRACTS OF JAPAN vol. 015, no. 198 (P-1204), 22. Mai 1991 & JP 03 048827 A (HITACHI MAXELL LTD), 1. März 1991
- PATENT ABSTRACTS OF JAPAN vol. 007, no. 023 (P-171), 29. Januar 1983 & JP 57 177126 A (HITACHI SEISAKUSHO KK), 30. Oktober 1982

## Beschreibung

Gegenstand der Erfindung ist eine elektrochrome Vorrichtung und ihre Herstellung.

Elektrochrome Vorrichtungen, die ein elektrochromes System enthalten, sind bereits bekannt.

Solche Vorrichtungen enthalten als elektrochromes System üblicherweise Paare von Redoxsubstanzen, die in einem inerten Lösungsmittel gelöst sind. Zusätzlich können Leitsalze, Lichtstabilisatoren und Substanzen, die die Viskosität beeinflussen, enthalten sein.

Als Paar von Redoxsubstanzen wird je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

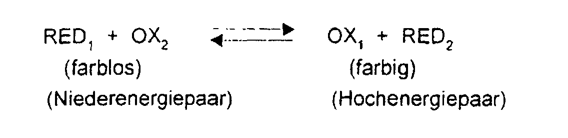

Aus US-A 4 902 108 ist bekannt, daß solche Paare von Redoxsubstanzen geeignet sind. bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt.

Elektrochrome Vorrichtungen können auf vielfältige Weise Anwendung finden. So können sie z.B. als Automobilrückspiegel ausgebildet sein, der bei Nachtfahrt durch Anlegen einer Spannung abgedunkelt werden kann und somit das Blenden durch Scheinwerfer fremder Fahrzeuge verhindert wird (vgl. z.B. US-A 3 280 701, US-A 4 902 108, EP-A 0 435 689). Weiterhin können solche Vorrichtungen auch in Fensterscheiben oder Autosonnendächern eingesetzt werden, wo sie nach Anlegen einer Spannung das Sonnenlicht abdunkeln. Letztlich kann mit solchen Vorrichtungen auch eine Anzeigevorrichtung aufgebaut werden zur bildlichen Darstellung von Informationen wie Buchstaben, Zahlen und Zeichen.

Elektrochrome Vorrichtungen bestehen normalerweise aus einem Paar Glas- oder Kunststoffscheiben, von denen im Falle eines Autospiegels eine verspiegelt ist. Eine Seite dieser Scheiben ist mit einer lichtdurchlässigen, elektrisch leitfähigen Schicht, z.B. Indium-Zinn-Oxid (ITO), beschichtet. Aus diesen Scheiben wird nun eine Zelle aufgebaut, indem sie mit ihrer einander zugewandten elektrisch leitfähig beschichteten Seite mit einem ringförmigen oder rechteckigen Dichtungsring verbunden, vorzugsweise verklebt werden. Der Dichtungsring stellt einen gleichmäßigen Abstand zwischen den Scheiben her, beispielsweise 0,01 bis 0,5 mm. In diese Zelle wird nun über eine Öffnung eine elektrochrome Lösung eingefüllt und die Zelle dicht verschlossen. Über die ITO-Schicht lassen sich die beiden Scheiben getrennt kontaktieren.

Bei den aus dem Stand der Technik bekannten elektrochromen Systemen sind solche Paare von Redoxsubstanzen enthalten, die nach Reduktion bzw. Oxidation farbige Radikale, Kationradikale oder Anionradikale bilden, die chemisch reaktiv sind. Wie beispielsweise aus Topics in Current Chemistry, Vol. 92, S. 1-44 (1980) bekannt ist, können solche Radikal(ionen) empfindlich gegenüber Elektrophilen oder Nukleophilen oder auch Radikalen sein. Es muß deshalb zum Erreichen einer hohen Stabilität einer elektrochromen Vorrichtung, die ein solches elektrochromes System enthält, das mehrere tausend Schaltcyclen überstehen soll, dafür gesorgt werden, daß das verwendete Lösungsmittel absolut frei von Elektrophilen, z.B. Protonen, Nukleophilen und Sauerstoff ist. Weiterhin muß dafür gesorgt werden, daß sich solche reaktiven Spezies nicht durch elektrochemische Prozesse an den Elektroden während des Betriebs der elektrochromen Vorrichtung bilden.

Geeignete Lösungsmittel sind aus den oben zitierten Patenten bekannt.

Aber auch das Dichtungs- und Verschlußmaterial der elektrochromen Zelle muß so beschaffen sein, daß es keine reaktiven Bestandteile enthält, abspaltet oder in Kontakt mit dem elektrochromen System bildet, die mit den elektrochromen Substanzen oder den aus ihnen elektrochemisch gebildeten Spezies wie den eben genannten radikalischen oder radikalionischen Spezies oder den elektrochemisch gebildeten oder im Gleichgewicht immer vorhandenen doppelt reduzierten oder doppelt oxidierten Spezies reagieren.

Die gemäß obiger Reaktionsgleichung formulierte Rückreaktion zu RED₁ und OX₂ erfolgt auch während des Betriebs der elektrochromen Vorrichtung kontinuierlich abseits der Elektroden innerhalb des Lösungsvolumens. Wegen der beschriebenen Gefahren von Abbaureaktionen der Radikal-(ionen) durch Elektrophile, Nukleophile oder Radikale ist es für die Langzeitstabilität des Displays wichtig, daß die Rückreaktion gemäß obiger Reaktionsgleichung möglichst rasch und ohne Nebenreaktionen erfolgen kann.

Es wurde gefunden, daß durch eine Kopplung von RED₁ und OX₂ über eine kovalente chemische Bindung die Elektronenübertragung erleichtert wird und somit die Rückreaktion gemäß obiger Reaktionsgleichung beschleunigt und Nebenreaktionen vermieden werden können.

Es wurden ebenfalls geeignete Kleber gefunden, die als Dichtung und als Verschluß der elektrochromen Vorrichtung nach dem Befüllen verwendet werden können, sowie geeignete Aushärtebedingungen für diese Kleber, so daß keine der oben beschriebenen gefährlichen Nebenreaktionen eintreten.

Die vorliegende Erfindung betrifft demnach eine elektrochrome Vorrichtung bestehend aus einem Paar transparent und leitfähig beschichteter Glas- oder Kunststoffplatten, von denen eine verspiegelt sein kann und von denen bei einer der beiden Platten oder auch bei beiden die leitfähige Schicht in getrennte, einzeln elektrisch kontaktierte Segmente aufgeteilt sein kann, die über eine Klebstoffraupe, in die Abstandshalter eingebettet sein können, auf den Seiten ihrer leitfähigen Beschichtung zusammengefügt sind, und bei der das Volumen gebildet aus den beiden Platten und der Klebstoffraupe mit einer elektrochromen Flüssigkeit gefüllt ist und bei der die zum Einfüllen der elektrochromen Flüssigkeit nötige(n) Befüllöffnung oder Befüllöffnungen nach dem Befüllen mit einem Klebstoff verschlossen ist, dadurch gekennzeichnet, daß für die Kleberaupe zum Bau der elektrochromen Vorrichtung ein thermisch oder photochemisch oder nach photochemischer Initiierung thermisch härtender Epoxikleber verwendet wird und daß zum Verschluß ein photochemisch härtender Acrylatkleber oder ein photochemisch oder nach photochemischer Initiierung bei Raumtemperatur härtender Epoxikleber verwendet wird.

Epoxikleber sind beispielsweise aus J. W. Muskopf, S. B. McCollister in Ullmann's Encyclopedia of Organic Chemistry, VCH Verlagsgesellschaft mbH, 5th edition, Vol. A 9, S. 547 ff, 1987 bekannt. Die Aushärtung kann nach einem anionischen oder kationischen Mechanismus erfolgen.

Acrylat-Kleber sind beispielsweise aus W. Dierichs et al. in Ullmann's Encyklopädie der technischen Chemie, VCH Verlagsgesellschaft mbH, 4. Auflage, Band 14, S. 233 ff, 1977 bekannt. Die Aushärtung erfolgt nach einem radikalischen Mechanismus, der durch Ultraviolett-Strahlung mit Hilfe von zugesetzten Photoinitiatoren gestartet werden kann.

Der hier verwendete Epoxi-Kleber für die Kleberaupe, die die beiden transparenten Platten im gewünschten Abstand zusammenhält, ist ein Zweikomponenten- oder Einkomponentenkleber. Bevorzugt handelt es sich um einen Zweikomponenten-Epoxi-Kleber, bei dem beispielsweise die eine Komponente eine epoxidische Verbindung enthält und die andere Komponente eine aminische, anhydridische oder Lewis-Säure- oder Lewis-Base-Verbindung enthält oder um einen Einkomponenten-Epoxi-Kleber, der beispielsweise eine epoxidische Verbindung und eine verkappte Lewis- oder Brønsted-Säure- oder Lewis- oder Brønsted-Base-Verbindung enthält, die unter Wärme- oder Lichteinwirkung eine Lewis- oder Brønsted-Säure- oder Lewis- oder Brønsted-Base-Verbindung freisetzt.

Besonders bevorzugt handelt es sich bei der epoxidischen Komponente um ein Epoxid der Formel 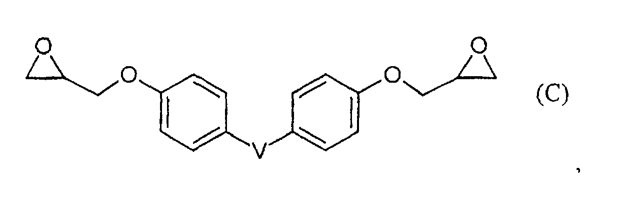 worin
- V: für eine Brücke steht, die ebenfalls Epoxi-Gruppen tragen kann, und die aminische Komponente ein primäres oder sekundäres aliphatisches, cycloaliphatisches, aromatisches, araliphatisches oder heterocyclisches, mindestens bifunktionelles Amin ist
und die Lewis-Säure-Verbindung, die in verkappter Form vorliegt, ein Nichtmetallhalogenid ist und die Brønsted-Säure-Verbindung, die in verkappter Form vorliegt, eine starke Protonensäure ist, die sich von Nichtmetallhalogeniden ableitet.

Solche Nichtmetallhalogenide sind beispielsweise Bortrifluorid, Bortrichlorid, Phosphorpentafluorid, Arsenpentafluorid, Arsenpentachlorid, Antimonpentafluorid oder Antimonpentachlorid. Die davon abgeleiteten Protonensäuren sind dann beispielsweise HBF₄, HBCl₄, HPF₆, HAsF₆, HAsCl₆, HSbF₆, HSbCl₆. Verkappte Nichtmetallhalogenide sind beispielsweise Addukte von Aminen an diese Nichtmetallhalogenide, beispielsweise BF₃.NH(C₂H₅)₂, BF₃.NH(CH₃)C₂H₅ usw.

Solche Verbindungen spalten thermisch die Nichtmetallholgenide ab. Auch Tetrafluorborate von aromatischen oder heterocyclischen Diazoniumsalzen sind verkappte Nichtmetallhalogenide. Sie spalten photochemisch BF₃ ab. Diaryliodonium oder Triarylsulfoniumsalze mit Anionen der oben genannten Protonensäuren, z. B. (C₆H₅)₂I⁺PF₆⁻. spalten photochemisch in die entsprechenden Protonensäuren, z. B. HPF₆, auf. Solche verkappten Produkte sind beispielsweise aus R. S. Bauer in R. W. Tess, G. W. Poehlein (eds.) Applied Polymer Science, 2^{nd} ed., ACS Symposium Series 285, ACS Washington, 1985, S. 931-961 bekannt.

Diese Kleber können zusätzlich auch noch andere Komponenten enthalten wie beispielsweise Glycidylester oder Glycidylether, Phenole oder Alkohole sowie im Falle der photochemisch härtbaren auch Peroxide oder Ferrocen. Beispiele sind Glycidyl-neodecanoat. Hexandiol-glycidylether, Phenol, Benzylalkohol, Cumolhydroperoxid.

Diesen Klebern können Abstandshalter beigemischt sein, so daß durch die Kleberaupe in einfacher Weise auch ein konstanter Abstand zwischen den beiden transparenten Platten sichergestellt ist. Typische Abstände sind beispielsweise 0,005 bis 2 mm, vorzugsweise 0,01 bis 0,5 mm. Geeignete Abstandshalter sind beispielsweise Glas- oder Kunststoffkugeln sowie gesiebte Fraktionen von Sanden, Siliciumcarbid oder ähnlichen Materialien.

Bei dem Kleber zum Verschluß der elektrochromen Vorrichtung nach deren Befüllung mit der elektrochromen Flüssigkeit handelt es sich bevorzugt um einen Einkomponenten-Epoxi-Kleber, der beispielsweise eine epoxidische Verbindung und eine verkappte Lewis- oder Brønsted-Säure- oder Lewis- oder Brønsted-Base-Verbindung enthält, die unter Wärme- oder Lichteinwirkung, insbesondere unter Lichteinwirkung, eine Lewis- oder Brønsted-Säure- oder Lewis- oder Brønsted-Base-Verbindung freisetzt oder um einen Acrylat-Kleber, der bevorzugt aus einer Bis- und einer Tris-Acrylatkomponente besteht, denen ein Photoinitiator zugemischt ist, der unter Lichteinwirkung im UV- oder daran benachbarten blauen Spektralbereich Radikale freisetzt.

Besonders bevorzugt handelt es sich bei der epoxidischen Komponente um ein Epoxid der Formel 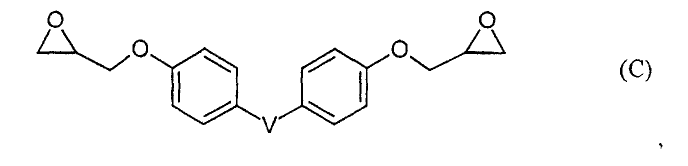 worin
- V: für eine Brücke steht, die ebenfalls Epoxi-Gruppen tragen kann,
und bei der Lewis-Säure-Verbindung, die in verkappter Form vorliegt, um ein Nichtmetallhalogenid und bei der Brønsted-Säure-Verbindung, die in verkappter Form vorliegt, um eine starke Protonensäure, die sich von Nichtmetallhalogeniden ableitet. Lewis- und Brønsted-Säuren und ihre verkappten Formen sind oben näher beschrieben.

Ebenfalls besonders bevorzugt handelt es sich bei der Acrylatmischung um Verbindungen der Formeln 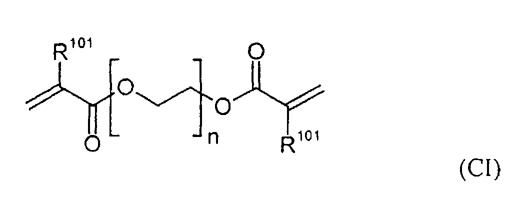 worin
- n: für eine ganze Zahl von 0 bis 20, vorzugsweise 0 bis 10 steht und
- R¹⁰¹: für Wasserstoff oder Methyl steht und 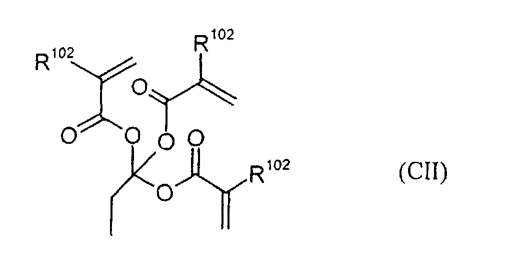
worin
- R¹⁰²: für Wasserstoff oder Methyl steht.

Die Zusammensetzung der Acrylatmischung aus (CI) und (CII) liegt besonders bevorzugt im Bereich (Teile an CI)/(Teile an CII) = 1 bis 5.

Bei den Photoinitiatoren handelt es sich besonders bevorzugt um Verbindungen auf der Basis von Benzophenon-Derivaten oder Thioxanthonen, die bei der Photolyse Radikale liefern. Besonders bevorzugt werden hierbei Photoinitiatoren für die UV-Härtung verwendet, so z. B. Irgacure® 651 (Ciba-Geigy), Darocur® 1116, Darocur® 1173, Darocur® 1664, Darocur® 2273, Darocur® 4043 (alle von E. Merck, Darmstadt). Der besonders bevorzugte Konzentrationsbereich dieser Photoinitiatoren liegt im Bereich 0,01 bis 5 Gew.-%.

Ganz besonders bevorzugt handelt es sich bei der epoxidischen Komponente des erfindungsgemäßen Epoxi-Kleber für die Kleberaupe, die die beiden transparenten Platten im gewünschten Abstand zusammenhält, um ein Epoxid der Formel 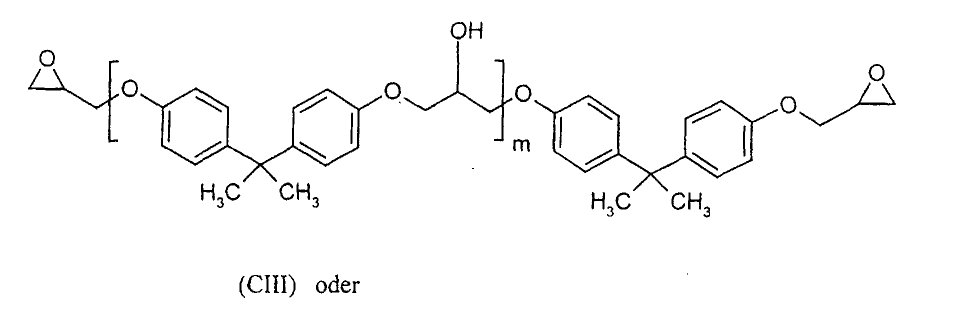 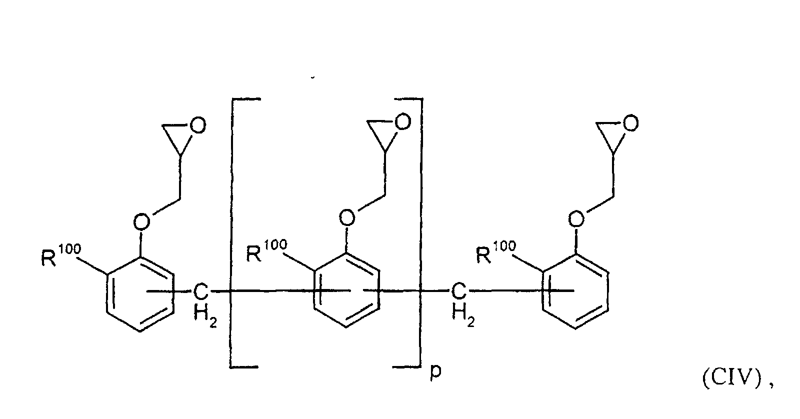 worin
- m und p: unabhängig voneinander für eine ganze Zahl von 0 bis 20, vorzugsweise 0 bis 5 stehen und
- R¹⁰⁰: für Wasserstoff oder Methyl steht
und bei der aminischen Komponente um ein aliphatisches Polyamin der Formel 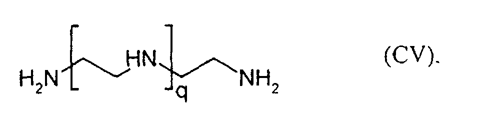
- q: für eine ganze Zahl von 2 bis 10, vorzugsweise 2 bis 4 steht, oder
um ein araliphatisches Amin wie α,α'-Diamino-m- oder p-xylol oder
um Polyaminoimidazolin oder
um ein aromatisches Amin wie Bis-(4-aminophenyl)methan oder Bis-(4-aminophenyl)sulfon
und bei der verkappten Lewis-Säure-Verbindung um ein Addukt von Bortrifluorid an sekundäre Amine wie BF₃ -NH(CH₃)C₂H₅ oder um ein Diazoniumsalz wie Ar-N₂⁺BF₄⁻ oder bei der verkappten Brønsted-Säure-Verbindung um ein Iodoniumsalz wie (Ar)₂I⁺BF₄⁻ oder (Ar)₂I⁺PF₆⁻ oder um ein Sulfoniumsalz wie (Ar)₃S⁺BF₄⁻ oder (Ar)₃S⁺PF₆⁻,
worin
- Ar: für einen aromatischen Rest, vorzugsweise Phenyl, steht.

Ganz besonders bevorzugt handelt es sich bei der epoxidischen Komponente des erfindungsgemäßen Epoxi-Kleber für den Zellenverschluß um ein Epoxid der Formel 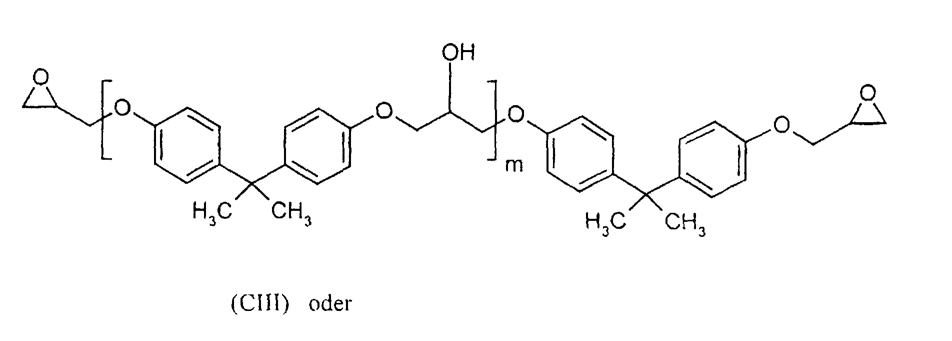 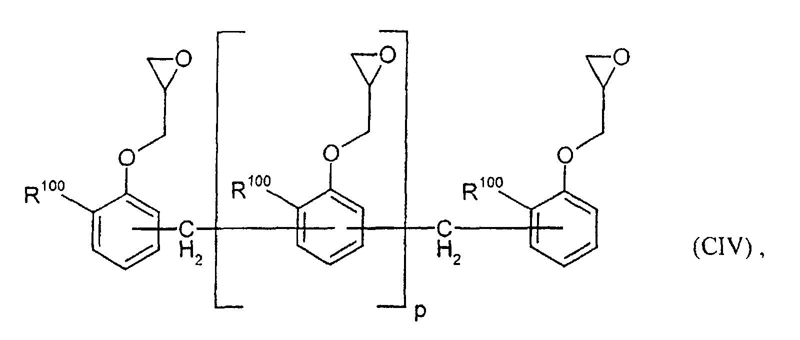 worin
- m und p: unabhängig voneinander für eine ganze Zahl von 0 bis 20, vorzugsweise 0 bis 5 stehen und
- R¹⁰⁰: für Wasserstoff oder Methyl steht,
und bei der verkappten Lewis-Säure-Verbindung um ein Addukt von Bortrifluorid an sekundäre Amine wie BF₃.NH(CH₃)C₂H₅ oder um ein Diazoniumsalz wie Ar-N₂⁺BF₄⁻ oder bei der verkappten Brønsted-Säure-Verbindung um ein Iodoniumsalz wie (Ar)₂I⁺BF₄⁻ oder (Ar)₂I⁺PF₆⁻ oder um ein Sulfoniumsalz wie (Ar)₃S⁺BF₄⁻ oder (Ar)₃S⁺PF₆⁻,
worin
- Ar: für einen aromatischen Rest, vorzugsweise Phenyl, steht.

Ebenfalls ganz besonders bevorzugt handelt es sich bei den Acrylaten für den Zellenverschluß um eine Mischung aus Verbindungen der Formeln 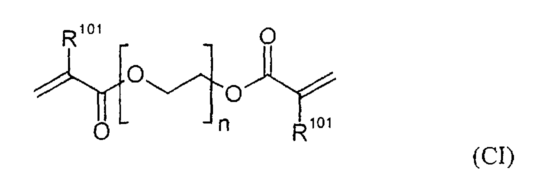 worin
- n: für eine ganze Zahl von 0 bis 20, vorzugsweise 5 bis 15 steht und
- R¹⁰¹: für Wasserstoff oder Methyl steht und 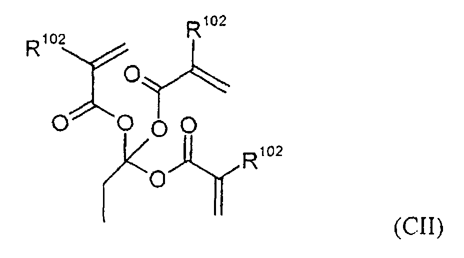
worin
- R¹⁰²: für Wasserstoff oder Methyl steht.

Die Zusammensetzung der Acrylatmischung aus (CI) und (CII) liegt ganz besonders bevorzugt im Bereich (Teile an CI)/(Teile an CII) = 1 bis 2.

Bei den Photoinitiatoren handelt es sich ganz besonders bevorzugt um Verbindungen auf der Basis von Benzophenon-Derivaten oder Thioxanthonen, die bei der Photolyse Radikale liefern. Ganz besonders bevorzugt werden hierbei Photoinitiatoren für die UV-Härtung verwendet, so z.B. ganz besonders Darocur® 1173 (E. Merck, Darmstadt) und Irgacure® 651 (Ciba-Geigy). Der ganz besonders bevorzugte Konzentrationsbereich dieser Photoinitiatoren liegt im Bereich 0,1 bis 3 Gew.-%.

Insbesondere bevorzugte thermisch härtende Epoxikleber enthalten Epoxide der Formel (CIII),
worin
- m: für 2 bis 5 steht,
und Amine der Formel (CV),
worin
- q: für 2 bis 4 steht,
sowie α,α'-Diamino-m-xylol oder Mischungen davon sowie gegebenenfalls weitere epoxidische Verbindungen wie Glycidylester, beispielsweise Glycidyl-neodecanoat und/oder Glycidylether, beispielsweise Hexandiolglycidylether.

Insbesondere bevorzugte photochemisch oder photochemisch initiiert härtende Epoxikleber enthalten Epoxide der Formel (CIII),
worin
- m: für 2 bis 5 steht,
und als verkappte Lewis-Säure-Verbindung ein Diazoniumsalz wie Ar-N₂⁺BF₄⁻ oder als verkappte Brønsted-Säure-Verbindung ein lodoniumsalz wie (Ar)₂I⁺BF₄⁻ oder (Ar)₂I⁺PF₆⁻ oder um ein Sulfoniumsalz wie (Ar)₃S⁺BF₄⁻ oder (Ar)₃S⁺PF₆⁻,
worin
- Ar: für einen aromatischen Rest, vorzugsweise Phenyl, steht.

Insbesondere bevorzugte photochemisch härtende Acrylat-Kleber enthalten Acrylate der Formeln (CI)
worin
- n: für 5 bis 10 steht und
- R¹⁰¹: für Wasserstoff steht und
und (CII)
worin
- R¹⁰²: für Wasserstoff steht.

Die insbesonders bevorzugte Zusammensetzung der Acrylatmischung aus (CI) und (CII) liegt bei (Teile an CI)/(Teile an CII) = 5/3.

Der insbesonders bevorzugte Photoinitiator Darocur® 1173 (E. Merck, Darmstadt) wird dabei in einer Konzentration von 0,5 Gew.-% eingesetzt.

Die Epoxi- und die Acrylat-Kleber besitzen vorzugsweise eine hohe Viskosität. Dadurch wird das Autbringen des Klebers beim Zusammenfügen der beiden transparenten Platten erleichtert und die Kleberaupe verläuft nicht beim Aushärten. Dadurch werden insbesondere beim Verschluß der mit der hier verwendeten elektrochromen Flüssigkeit gefüllten Zellen Probleme vermieden, da höherviskose Kleber sich nicht so leicht mit der Flüssigkeit vermischen wie niederviskose. Solche Vermischungen können zu ungenügender Klebewirkung, aber auch zum teilweisen ungewünschten Verkleben und somit Inaktivieren der leitfähigen Beschichtung im Inneren der Zelle führen. Beispielsweise sind Viskositäten >10.000 mPas, vorzugsweise >20.000 mPas, besonders vorzugsweise >30.000 mPas gut geeignet. Die Viskosität kann durch die Kleberkomponenten selber, beispielsweise durch den Oligomerisierungsgrad n, m, p und/oder q in den obigen Formeln (CI) und (CIII) bis (CV), beeinflußt werden. Sie kann aber auch durch Zusätze wie Füllstoffe beeinflußt werden. Solche Füllstoffe können sein Aerosile, z. B. auf Basis von Kieselgelen oder ähnlichem, Clays, Organoclays, Zemente, Silikate, Sande, Siliciumcarbid-, Glas oder Quarz-Pulver, organische Kunststoffpulver oder -partikel oder organische Oligomere wie Harnstoffe, Urethane, Amide, Polyester und ähnliches. Bevorzugt sind Aerosile. Solche Füllstoffe reduzieren auch den Schwund beim Aushärten und verhindern somit eine Veränderung der Form der Kleberaupe oder gar eine Bildung von Rissen in der Kleberaupe.

Die Aushärtung der Klebstoffe hängt von ihrer chemischen Zusammensetzung ab.

Thermisch härtbare Epoxikleber auf Basis von Epoxiden der Formel (CIII),
worin
- m: für 2 bis 5 steht,
und Aminen der Formel (CV),
worin
- q: für 2 bis 4 steht,
sowie α,α'-Diamino-m-xylol oder Mischungen davon sowie gegebenenfalls weiterer epoxidischer Verbindungen wie Glycidylester, beispielsweise Glycidyl-neodecanoat werden beispielsweise ausgehärtet bei Temperaturen von 90 bis 170°C, vorzugsweise 110 bis 150°C über einen Zeitraum von beispielsweise 5 bis 60 min, vorzugsweise 10 bis 30 min.

Photochemisch oder photochemisch initiiert härtende Epoxikleber auf Basis von Epoxiden der Formel (CIII),
worin
- m: für 2 bis 5 steht,
und einer verkappten Lewis-Säure, beispielsweise NO₂-C₆H₄⁻N₂⁺BF₄⁻, oder einer verkappten Brønsted-Säure-Verbindung, beispielsweise (C₆H₅)₂I⁺BF₄⁻ oder (C₆H₅)₂I⁺PF₆⁻ oder (C₆H₅)₃S⁺BF₄⁻ oder (C₆H₅)₃S⁺PF₆⁻, werden durch sichtbares oder UV-Licht entweder komplett ausgehärtet oder vorteilhafter durch sichtbares oder UV-Licht nur initiiert, wobei der Kleber nicht aushärtet, und dann bei Raumtemperatur oder höherer Temperatur, beispielsweise bei 30 bis 150°C, vorzugsweise bei 70 bis 130°C ausgehärtet. Die Aushärtezeit hängt von der Temperatur ab. So kann sie bei Raumtemperatur beispielsweise 10 bis 24 h betragen, bei 110°C aber nur 10 bis 30 min. Für die Belichtung kann eine UV-Lampe, eine Blitzlampe oder eventuell auch Tageslicht oder das Licht von Tageslichtlampen verwendet werden.

In so ausgehärteten Klebern sind die Kleberbestandteile, insbesondere die epoxidischen und aminischen Bestandteile so fest und vollständig in das makromolekulare Gefüge eingebaut, daß sie nicht mehr mit der hier verwendeten elektrochromen Flüssigkeit oder den durch Reduktion oder Oxidation gebildeten Spezies reagieren können. Die Verklebungen sind auch so fest, daß sie thermische Belastungen beispielsweise zwischen -40 und +105°C problemlos überstehen und auch in diesem Temperaturbereich nicht von der hier verwendeten elektrochromen Flüssigkeit angelöst, aufgequollen oder unterwandert werden.

Photochemisch härtbare Acrylat-Kleber auf Basis von Acrylaten der Formeln (CI)
worin
- n: für 5 bis 15 steht und
- R¹⁰¹: für Wasserstoff steht und
und (CII)
worin
- R¹⁰²: für Wasserstoff steht
mit einer Zusammensetzung der Acrylatmischung (Teile an CI)/(Teile an CII) = 5/3 und einer Photoinitiatorkonzentration an Darocur® 1173 von 0,5 Gew.-% werden durch UV-Licht einer geeigneten Lampe bei Raumtemperatur vollständig ausgehärtet.

So ausgehärtete Klebungen überstehen thermische Belastungen beispielsweise zwischen -40 und +105°C problemlos und werden auch nicht in diesem Temperaturbereich von der hier verwendeten elektrochromen Flüssigkeit angelöst, aufgequollen oder unterwandert.

Vorzugsweise enthält die elektrochrome Flüssigkeit mindestens eine oxidierbare Substanz RED₁, die durch Elektronenabgabe an einer Anode, und mindestens eine reduzierbare Substanz OX₂, die durch Elektronenaufnahme an einer Kathode in ihre jeweiligen Formen OX₁ bzw. RED₂ übergeben, wobei mit mindestens einer dieser Elektronenabgaben bzw. Elektronenaufnahmen eine Änderung der Extinktion im sichtbaren Bereich des Spektrums verbunden ist, wobei nach Ladungsausgleich jeweils die ursprünglichen Formen RED₁ und OX₂ zurückgebildet werden. Insbesondere ist mindestens eine der enthaltenen Substanzen RED₁ und OX₂ über eine Brücke kovalent miteinander verknüpft.

Die Reduktions- und Oxidationsprozesse in der Flüssigkeit der erfindungsgemäßen elektrochromen Vorrichtung erfolgen im allgemeinen durch Elektronenaufnahme bzw. -abgabe an einer Kathode bzw. Anode, wobei zwischen den Elektroden vorzugsweise eine Potentialdifferenz von 0,3 bis 3 V herrscht. Nach Abschalten des elektrischen Potentials erfolgt im allgemeinen spontan ein Ladungsausgleich zwischen den Substanzen RED₂ und OX₁, wobei eine Entfärbung bzw. Farbaufhellung eintritt. Ein solcher Ladungsausgleich erfolgt auch bereits während des Stromflusses im Innern des Elektrolytvolumens.

Die erfindungsgemäße elektrochrome Vorrichtung enthält in ihrer elektrochromen Flüssigkeit bevorzugt mindestens eine elektrochrome Substanz der Formel (I) 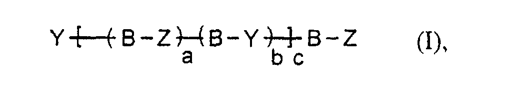 worin
- Y und Z: unabhängig voneinander für einen Rest OX₂ oder RED₁ stehen, wobei aber mindestens ein Y für OX₂ und mindestens ein Z für RED₁ steht,
wobei
OX₂ für den Rest eines reversibel elektrochemisch reduzierbaren Redoxsystems steht, und
RED₁ für den Rest eines reversibel elektrochemisch oxidierbaren Redoxsystems steht,
- B: für ein Brückenglied steht,
- c: für eine ganze Zahl von 0 bis 1000 steht, bevorzugt 0 bis 100, besonders bevorzugt 0 bis 5 steht, und
- a und b: unabhängig voneinander für eine ganze Zahl von 0 bis 100 stehen, vorzugsweise für eine ganze Zahl von 0 bis 10 stehen, besonders bevorzugt für 0 bis 3 stehen.

Vorzugsweise ist (a+b) c ≤ 10.000, besonders bevorzugt 100.

Bevorzugt enthält die elektrochrome Vorrichtung in ihrer elektrochromen Flüssigkeit mindestens eine elektrochrome Substanz der Formel (I), worin
Y für OX₂ und Z für RED₁ steht und Y und Z in ihrer Reihenfolge alternieren.

Insbesondere bevorzugt enthält die erfindungsgemäße elektrochrome Vorrichtung in ihrer elektrochromen Flüssigkeit mindestens eine elektrochrome Substanz der Formeln

OX₂-B-RED₁ (Ia),

OX₂-B-RED₁-B-OX₂ (Ib),

RED₁-B-OX₂-B-RED₁ (Ic),

oder

OX₂-(B-RED₁-B-OX₂)_{d}-B-RED₁ (Id),

worin
OX₂, RED₁ und B die oben angegebene Bedeutung haben, und
- d: für eine ganze Zahl von 1 bis 5 steht.

Ganz besonders bevorzugt enthält die erfindungsgemäße elektrochrome Vorrichtung in ihrer elektrochromen Flüssigkeit mindestens eine elektrochrome Substanz der Formeln (Ia)-(Id),
worin
- OX₂: für den Rest einer kathodisch reduzierbaren Substanz steht, die im cyclischen Voltammogramm, aufgenommen in einem inerten Lösungsmittel bei Raumtemperatur, wenigstens zwei chemisch reversible Reduktionswellen zeigt, wobei die erste dieser Reduktionswellen zu einer Zunahme der Extinktion bei wenigstens einer Wellenlänge im sichtbaren Bereich des elektromagnetischen Spektrums führt,
- RED₁: für den Rest der anodisch reversibel oxidierbaren Substanz steht, die im cyclischen Voltammogramm, aufgenommen in einem inerten Lösungsmittel bei Raumtemperatur, wenigstens zwei chemisch reversible Oxidationswellen zeigt, wobei die erste dieser Oxidationswellen zu einer Zunahme der Extinktion bei wenigstens einer Wellenlänge im sichtbaren Bereich des elektromagnetischen Spektrums führt, und
- B: für ein Brückenglied steht.

Besonders bevorzugt ist eine erfindungsgemäße elektrochrome Vorrichtung, welche mindestens eine Substanz der Formel (Ia)-(Id) enthält, worin
- OX₂: für einen Rest der Formeln 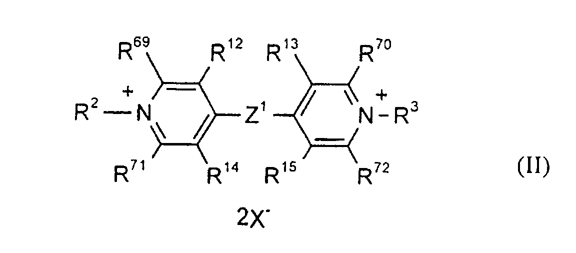 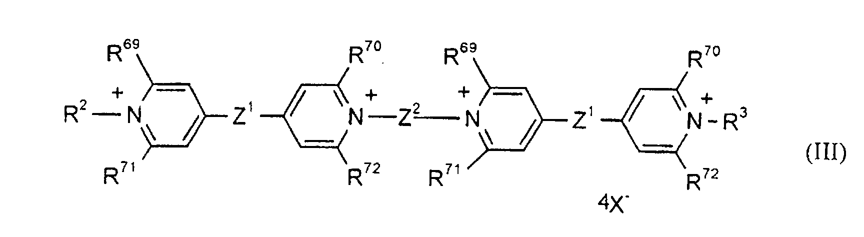 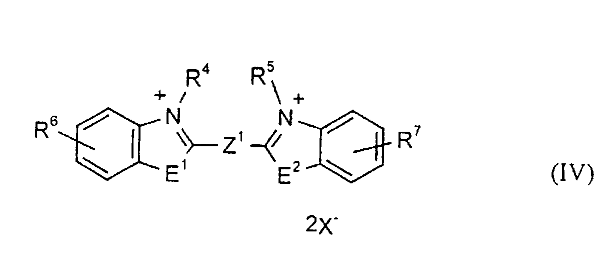 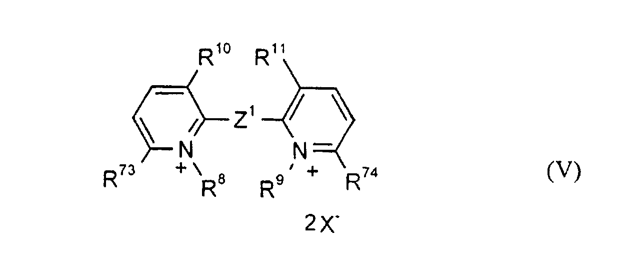 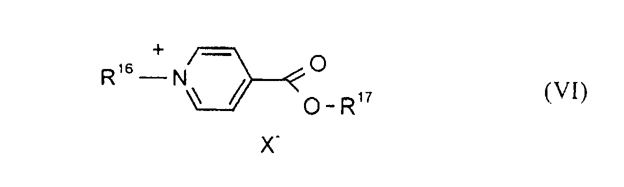 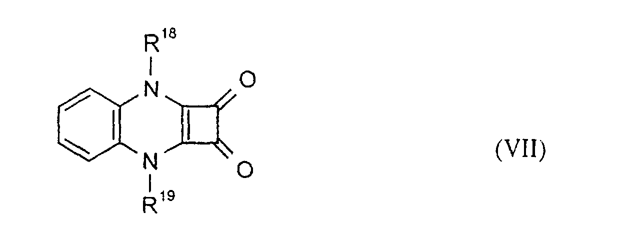 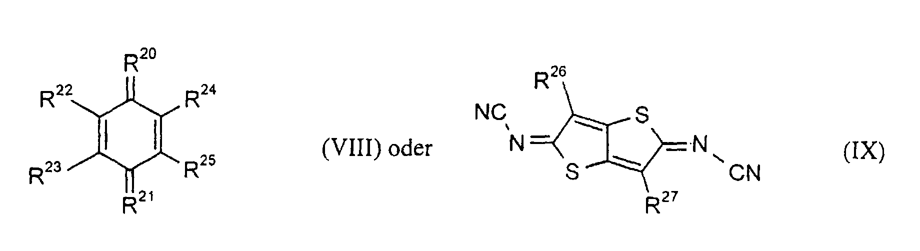
steht, wobei
- R² bis R⁵, R⁸ , R⁹, R¹⁶ bis R¹⁹: unabhängig voneinander C₁- bis C₁₈-Alkyl, C₂- bis C₁₂-Alkenyl, C₃- bis C₇-Cycloalkyl, C₇- bis C₁₅-Aralkyl oder C₆- bis C₁₀-Aryl bedeuten oder
- R⁴ und R⁵ oder R⁸ und R⁹: gemeinsam eine -(CH₂)₂- oder -(CH)₃-Brücke bilden,
- R⁶, R⁷ und R²² bis R²⁵: unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
- R²² und R²³ und/oder R²⁴ und R²⁵: eine -CH=CH-CH=CH-Brücke bilden,
- R¹⁰ und R¹¹; R¹² und R¹³; R¹⁴ und R¹⁵: unabhängig voneinander Wasserstoff oder paarweise eine -(CH₂)₂-, -(CH₂)₃- oder -CH=CH-Brücke bedeuten,
- R²⁰ und R²¹: unabhängig voneinander O, N-CN, C(CN)₂ oder N-C₆- bis C₁₀-Aryl bedeuten,
- R²⁶: Wasserstoff, C₁- bis C₄-Alkyl, C₁- bis C₄-Alkoxy, Halogen, Cyano. Nitro, C₁- bis C₄-Alkoxycarbonyl oder C₆- bis C₁₀-Aryl bedeutet,
- R⁶⁹ bis R⁷⁴: unabhängig voneinander Wasserstoff oder C₁-C₆-Alkyl bedeuten, oder
- R⁶⁹; R¹²: und/oder R⁷⁰; R¹³ eine -CH=CH-CH=CH-Brücke bilden,
- E¹ und E²: unabhängig voneinander O, S, NR¹ oder C(CH₃)₂ bedeuten oder
- E¹ und E²: gemeinsam eine -N-(CH₂)₂-N-Brücke bilden,
- R¹: C₁- bis C₁₈-Alkyl, C₂- bis C₁₂-Alkenyl, C₄- bis C₇-Cycloalkyl, C₇- bis C₁₅-Aralkyl, C₆- bis C₁₀-Aryl bedeutet,
- Z¹: eine direkte Bindung, -CH=CH-, -C(CH₃)=CH-, -C(CN)=CH-, -CCl=CCl-, -C(OH)=CH-, -CCl=CH-, -C=C-, -CH=N-N=CH-, -C(CH₃)=N-N-C(CH₃)- oder -CCl=N-N=CCl- bedeutet,
- Z²: -(CH₂)ᵣ- oder -CH₂-C₆H₄-CH₂- bedeutet,
- r: eine ganze Zahl von 1 bis 10 bedeutet,
- X⁻: ein unter den Bedingungen redox-inertes Anion bedeutet,
wobei die Bindung zum Brückenglied B über einen der Reste R²-R¹⁹, R²²-R²⁷ oder im Falle, daß E¹ oder E² für NR¹ steht über R¹ erfolgt und die genannten Reste dann für eine direkte Bindung stehen,
- RED₁: für einen der folgenden Reste 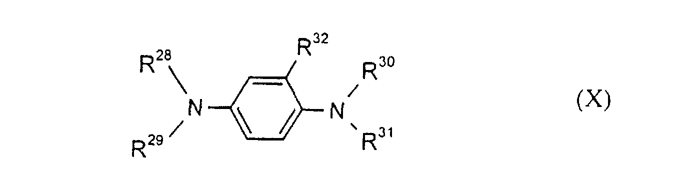 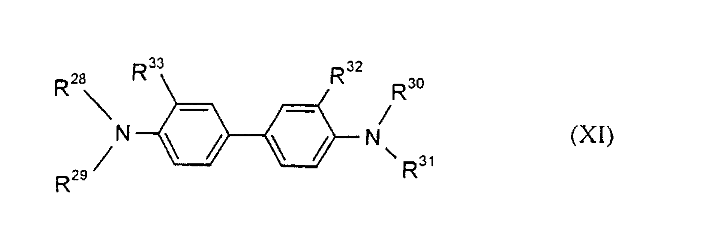 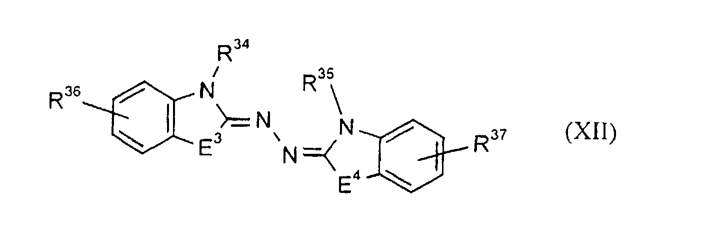 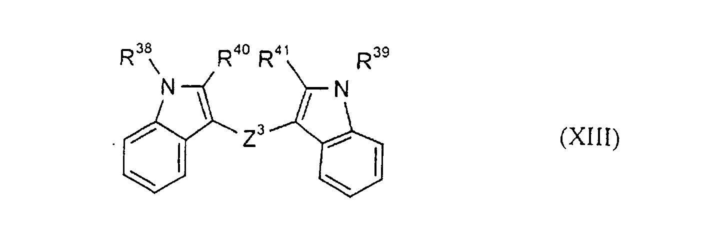 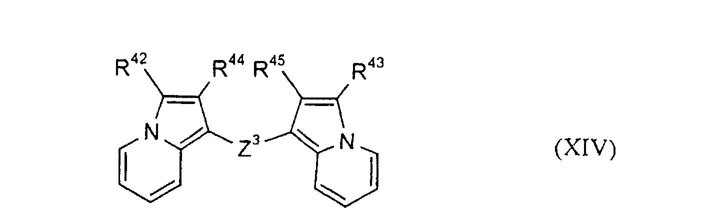 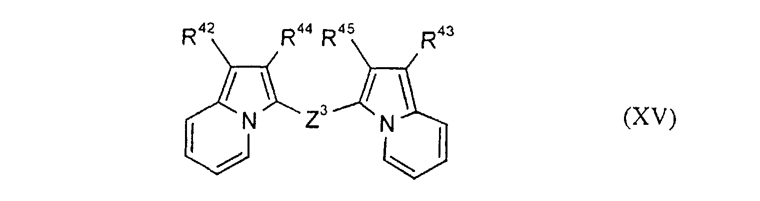 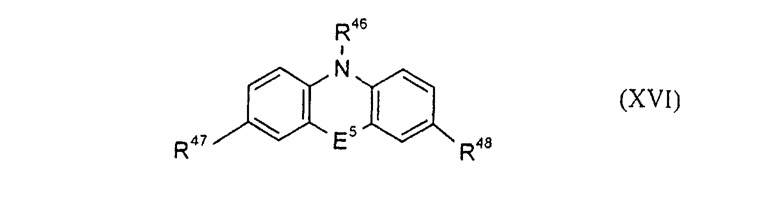 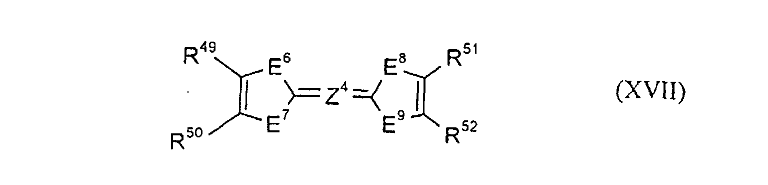 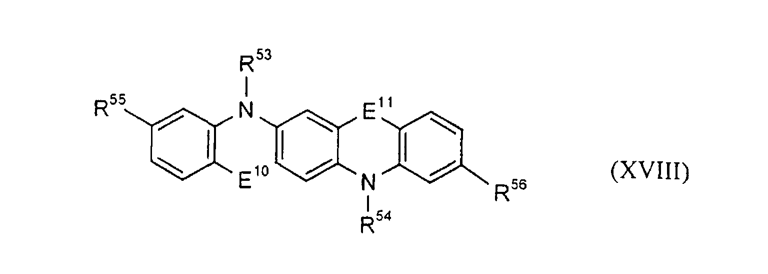 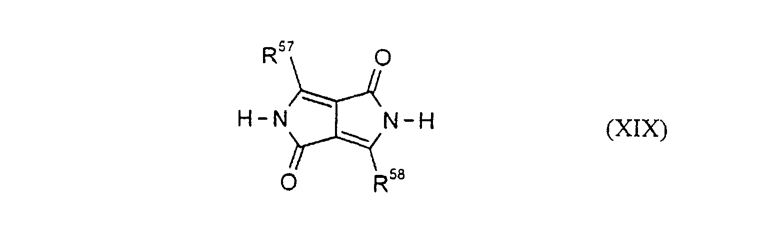 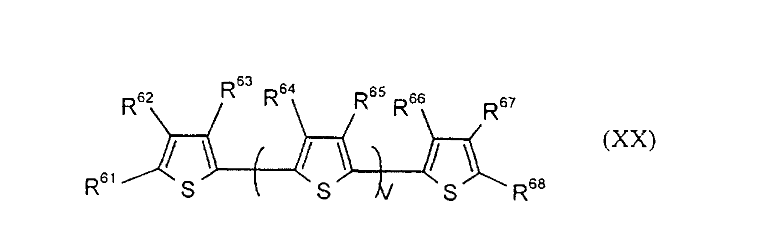
steht, worin
- R²⁸ bis R³¹, R³⁴, R³⁵, R³⁸, R³⁹, R⁴⁶, R⁵³ und R⁵⁴: unabhängig voneinander C₁- bis C₁₈-Alkyl, C₂- bis C₁₂-Alkenyl, C₃- bis C₇-Cycloalkyl, C₇- bis C₁₅-Aralkyl oder C₆- bis C₁₀-Aryl bedeuten, und R⁴⁶, R⁵³ und R⁵⁴ zusätzlich Wasserstoff bedeuten,
- R³², R³³, R³⁶, R³⁷, R⁴⁰, R⁴¹, R⁴² bis R⁴⁵, R⁴⁷, R⁴⁸, R⁴⁹ bis R⁵² und R⁵⁵ bis R⁵⁷: unabhängig voneinander Wasserstoff, C₁- bis C₄-Alkyl, C₁- bis C₄- Alkoxy, Halogen, Cyano, Nitro, C₁- bis C₄-Alkoxycarbonyl oder C₆- bis C₁₀-Aryl bedeuten und R⁵⁷ und R⁵⁸ zusätzlich einen gegebenenfalls benzanellierten aromatischen oder quasiaromatischen fünf- oder sechsgliedrigen heterocyclischen Ring bedeuten und R⁴⁸ zusätzlich NR⁷⁵R⁷⁶ bedeutet,
- R⁴⁹ und R⁵⁰ und/oder R⁵¹ und R⁵²: eine -(CH₂)₃-, -(CH₂)₄-, -(CH₂)₅- oder -CH=CH-CH=CH-Brücke bilden,
- Z³: eine direkte Bindung, eine -CH=CH- oder -N=N-Brücke bedeutet,
- =Z⁴=: eine direkte Doppelbindung, eine =CH-CH= oder =N-N=-Brücke bedeutet,
- E³ bis E⁵, E¹⁰ und E¹¹: unabhängig voneinander O, S, NR⁵⁹ oder C(CH₃)₂ bedeuten und E⁵ zusätzlich C = O oder SO₂ bedeutet, oder
- E³ und E⁴: unabhängig voneinander -CH=CH- bedeuten,
- E⁶ bis E⁹: unabhängig voneinander S, Se oder NR⁵⁹ bedeuten,
- R⁵⁹, R⁷⁵ und R⁷⁶: unabhängig voneinander C₁- bis C₁₂-Alkyl, C₂- bis C₈-Alkenyl, C₃- bis C₇-Cycloalkyl, C₇- bis C₁₅-Aralkyl oder C₆- bis C₁₀-Aryl bedeuten und R⁷³ zusätzlich Wasserstoff bedeutet, oder
- R⁷⁵ und R⁷⁶: in der Bedeutung von NR⁷⁵R⁷⁶ gemeinsam mit dem N-Atom, an das sie gebunden sind, einen fünf- oder sechsgliedrigen, gesättigten Ring bilden, der weitere Heteroatome enthalten kann,
- R⁶¹ bis R⁶⁸: unabhängig voneinander Wasserstoff, C₁- bis C₆-Alkyl, C₁- bis C₄-Alkoxy, Cyano, C₁ - bis C₄-Alkoxycarbonyl oder C₆- bis C₁₀-Aryl bedeuten, oder
- R⁶¹; R⁶² und R⁶⁷; R⁶⁸: unabhängig voneinander gemeinsam eine -(CH₂)₃-, -(CH₂)₄- oder -CH=CH-CH=CH-Brücke bilden,
- v: eine ganze Zahl zwischen 0 und 10 bedeutet,
wobei die Bindung zum Brückenglied B über einen der Reste R²⁸-R⁵⁸, R⁶¹, R⁶², R⁶⁷, R⁶⁸ oder im Falle, daß einer der Reste E³-E¹¹ für NR⁵⁹ steht über R⁵⁹ erfolgt und die genannten Reste dann für eine direkte Bindung stehen, und
- B: für ein Brückenglied der Formeln -(CH₂)ₙ- oder -[Y¹ₛ(CH₂)ₘ-Y²]ₒ-(CH₂)ₚ-Y³_{q}- steht, welche jeweils gegebenenfalls durch C₁-C₄-Alkyl, C₁- bis C₄-Alkoxy, Halogen oder Phenyl substituiert sind.
- Y¹ bis Y³: unabhängig voneinander für O, S, NR⁶⁰, COO, CONH, NHCONH, Cyclopentandiyl, Cyclohexandiyl, Phenylen oder Naphthylen stehen,
- R⁶⁰: C₁- bis C₆-Alkyl, C₂- bis C₆-Alkenyl, C₄- bis C₇-Cycloalkyl, C₇- bis C₁₅-Aralkyl oder C₆- bis C₁₀-Aryl bedeutet,
- n: eine ganze Zahl von 1 bis 12 bedeutet,
- m und p: unabhängig voneinander eine ganze Zahl von 0 bis 8 bedeuten,
- o: eine ganze Zahl von 0 bis 6 bedeutet und
- q und s: unabhängig voneinander 0 oder 1 bedeuten.

Ganz besonders bevorzugt ist ein erfindungsgemäßes elektrochromes System, welches mindestens eine Substanz der Formel (Ia)-(Id) enthält,
worin
- OX₂: für einen Rest der Formeln (II), (III), (IV) oder (V) steht,
wobei
- R², R³, R⁴, R⁵, R⁸ und R⁹: unabhängig voneinander für C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl stehen,
- R⁶ und R⁷: unabhängig voneinander für Wasserstoff, Methyl, Ethyl, Methoxy, Ethoxy, Fluor, Chlor, Brom, Cyano, Nitro, Methoxycarbonyl oder Ethoxycarbonyl stehen,
- R¹⁰, R¹¹; R¹², R¹³ und R¹⁴, R¹⁵: unabhängig voneinander für Wasserstoff oder, falls Z¹ eine direkte Bindung bedeutet, jeweils gemeinsam für eine -(CH₂)₂-, -(CH₂)₃- oder -CH=CH-Brücke stehen,
oder
- R⁴, R⁵ und R⁸, R⁹: unabhängig voneinander paarweise gemeinsam für -(CH₂)₂- oder -(CH₃)₃-Brücke stehen, falls Z¹ eine direkte Bindung bedeutet,
- R⁶⁹ bis R⁷⁴: unabhängig voneinander Wasserstoff oder C₁-C₄-Alkyl bedeuten,
- E¹ und E²: gleich sind und für O, S, NR¹ oder C(CH₃)₂ stehen oder gemeinsam eine -N-(CH₂)₂-N-Brücke bilden,
- R¹: für C₁- bis C₁₂-Alkyl, C₂- bis C₄-Alkenyl, C₅- bis C₇-Cycloalkyl, C₇- bis C₁₅-Aralkyl oder C₆- bis C₁₀-Aryl steht,
- Z¹: für eine direkte Bindung, -CH=CH-, -C(CH₃)=CH-, -C(CN)=CH-, -C=C- oder -CH=N-N=CH- steht,
- Z²: für -(CH)ᵣ- oder -CH₂-C₆H₄-CH₂- steht,
- r: für eine ganze Zahl zwischen 1 und 6 steht,
- X⁻: für ein unter den Bedingungen redox-inertes, farbloses Anion steht,
wobei die Bindung zum Brückenglied B über einen der Reste R²-R¹¹ oder im Falle, daß E¹ oder E² für NR¹ steht über R¹ erfolgt und die genannten Reste dann für eine direkte Bindung stehen,
- RED₁: für einen Rest der Formeln (X), (XI), (XII), (XIII), (XVI), (XVII), (XVIII) oder (XX) steht,
wobei
- R²⁸ bis R³¹, R³⁴, R³⁵, R³⁸, R³⁹, R⁴⁶, R⁵³ und R⁵⁴: unabhängig voneinander C₁bis C₁₂-Alkyl, C₂- bis C₈-Alkenyl, C₅- bis C₇-Cycloalkyl, C₇- bis C₁₅-Aralkyl oder C₆- bis C₁₀-Aryl bedeuten und
- R⁴⁶, R⁵³ und R⁵⁴: zusätzlich Wasserstoff bedeuten,
- R³², R³³, R³⁶, R³⁷, R⁴⁰, R⁴¹, R⁴⁷ bis R⁵², R⁵⁵ und R⁵⁶: unabhängig voneinander Wasserstoff, Methyl, Ethyl, Methoxy, Ethoxy, Fluor, Chlor, Brom, Cyan, Nitro, Methoxycarbonyl, Ethoxycarbonyl oder Phenyl bedeuten und
- R⁵⁷ und R⁵⁸: zusätzlich 2- oder 4-Pyridyl bedeuten und
- R⁴⁸: zusätzlich NR⁷⁵R⁷⁶ bedeutet,
- Z³: eine direkte Bindung, eine -CH=CH- oder -N=N-Brücke bedeutet,
- =Z⁴=: eine direkte Doppelbindung, eine =CH-CH= oder =N-N=-Brücke bedeutet,
- E³ bis E⁵, E¹⁰ und E¹¹: unabhängig voneinander O, S, NR⁵⁹ oder C(CH₃)₂ bedeuten, E³ und E⁴ aber die gleiche Bedeutung haben,
- E⁶ bis E⁹: untereinander gleich sind und S, Se oder NR⁵⁹ bedeuten und
- E⁵: zusätzlich C = O bedeutet,
- E⁶: für NR⁵⁹ steht, wobei R⁵⁹ eine direkte Bindung zur Brücke B bedeutet und
- E⁷ bis E⁹: die oben angegebene Bedeutung besitzen, aber untereinander nicht gleich sein müssen,
- R⁵⁹, R⁷⁵ und R⁷⁶: unabhängig voneinander C₁- bis C₁₂-Alkyl, C₂- bis C₈-Alkenyl, C₅- bis C₇-Cycloalkyl, C₇- bis C₁₅-Aralkyl oder C₆- bis C₁₀-Aryl bedeuten, und R⁷³ zusätzlich Wasserstoff bedeutet oder
- R⁷⁵ und R⁷⁶: in der Bedeutung NR⁷⁵R⁷⁶ gemeinsam mit dem N-Atom, an das sie gebunden sind, Pyrrolidino, Piperidino oder Morpholino bedeuten,
- R⁶¹, R⁶² und R⁶⁷, R⁶⁸: unabhängig voneinander für Wasserstoff, C₁- bis C₄-Alkyl, Methoxycarbonyl, Ethoxycarbonyl oder Phenyl oder paarweise gemeinsam für eine -(CH₂)₃- oder -(CH₂)₄-Brücke stehen,
- R⁶³ bis R⁶⁶: für Wasserstoff stehen und
- v: für eine ganze Zahl von 1 bis 6 steht,
wobei die Bindung zum Brückenglied B über einen der Reste R²⁸-R⁴¹, R⁴⁶-R⁵⁶, R⁶¹, R⁶², R⁶⁷, R⁶⁸ oder im Falle, daß einer der Reste E³-E¹¹ für NR⁵⁹ steht, über R⁵⁹ erfolgt und die genannten Reste dann für eine direkte Bindung stehen,
- B: für ein Brückenglied der Formeln -(CH₂)ₙ-, -(CH₂)ₘ-O-(CH₂)ₚ-, -(CH)ₘ-NR⁶⁰-(CH₂)ₚ-, -(CH₂)ₘ-C₆H₄-(CH₂)ₚ-, -[O-(CH₂)ₚ]ₒ-O-, -[NR⁶⁰-(CH₂)ₚ]ₒ-NR⁶⁰-, -[C₆H₄-(CH₂)ₚ]ₒ-C₆H₄-, -(CH₂)ₘ-OCO-C₆H₄-COO-(CH₂)ₚ-, -(CH₂)ₘ-NHCO-C₆H₄-CONH-(CH₂)ₚ-, -(CH₂)ₘ-NHCONH-C₆H₄-NHCONH-(CH₂)ₚ-, -(CH₂)ₘ-OCO-(CH₂)ₜ-COO-(CH₂)-, -(CH₂)ₘ-NHCO-(CH₂)ₜ-CONH-(CH)ₚ-, -(CH₂)ₘ-NHCONH-(CH₂)ₜ-NHCONH-(CH₂)ₚ- steht,
- R⁶⁰: für Methyl, Ethyl, Benzyl oder Phenyl steht,
- n: für eine ganze Zahl von 1 bis 10 steht,
- m und p: unabhängig voneinander für eine ganze Zahl von 0 bis 4 stehen,
- o: für eine ganze Zahl von 0 bis 2 steht und
- t: für eine ganze Zahl von 1 bis 6 steht.

Insbesondere bevorzugt ist ein erfindungsgemäßes elektrochromes System, welches mindestens eine Substanz der Formel (Ia)-(Id) enthält,
worin
- OX₂: für einen Rest der Formeln (II), (IV) oder (V) steht,
worin
- R², R⁴ und R⁸: für eine direkte Bindung zum Brückenglied B stehen,
- R³, R⁵ und R⁹: unabhängig voneinander für Methyl, Ethyl, Propyl, Butyl, Pentyl, Hexyl, Heptyl, Octyl, Benzyl oder Phenyl stehen, oder im Falle der Formeln Ic oder Id ebenfalls für eine direkte Bindung zum Brückenglied B stehen,
- R⁶ und R⁷: gleich sind und für Wasserstoff, Methyl, Methoxy, Chlor, Cyano oder Methoxycarbonyl stehen,
- R¹⁰, R¹¹; R¹², R¹³ und R¹⁴, R¹⁵: unabhängig voneinander für Wasserstoff oder, falls Z¹ eine direkte Bindung bedeutet, jeweils paarweise zusammen für eine -CH=CH-Brücke stehen,
- R⁶⁹ bis R⁷²: gleich sind und Wasserstoff, Methyl oder Ethyl bedeuten,
- R⁷³ und R⁷⁴: Wasserstoff bedeuten,
- E¹ und E²: gleich sind und für O oder S stehen,
- Z¹: für eine direkte Bindung oder -CH=CH- steht,
- X⁻: für ein unter den Bedingungen redox-inertes, farbloses Anion steht,
- RED₁: für einen Rest der Formeln (X), (XII), (XIII), (XVI) oder (XVII) steht,
- R²⁸, R³⁴, R³⁸, R⁴⁶ und R⁴⁹: für eine direkte Bindung zum Brückenglied B stehen,
- R²⁹ bis R³¹, R³⁵ und R³⁹: unabhängig voneinander für Methyl, Ethyl, Propyl, Butyl, Pentyl, Hexyl, Heptyl, Octyl, Benzyl oder Phenyl stehen, oder im Falle der Formeln Ib oder Id R³⁰, R³⁵ und R³⁹ ebenfalls für die direkte Bindung zum Brückenglied B stehen,
- R³², R⁴⁷ und R⁴⁸: für Wasserstoff stehen,
- R³⁶ R³⁷, R⁴⁰, R⁴¹ und R⁵⁰ bis R⁵²: unabhängig voneinander für Wasserstoff, Methyl, Methoxy, Chlor, Cyan, Methoxycarbonyl oder Phenyl stehen, oder im Falle der Formeln Ib oder Id R⁵¹ ebenfalls für eine direkte Bindung zum Brückenglied B steht,
- Z³: für eine direkte Bindung, eine -CH=CH- oder -N=N-Brücke steht,
- =Z⁴=: für eine direkte Doppelbindung, eine =CH-CH= oder =N-N=-Brücke steht,
- E³ bis E⁵: unabhängig voneinander für O, S oder NR⁵⁹ stehen, E³ und E⁴ aber die gleiche Bedeutung haben,
- E⁶ bis E⁹: untereinander gleich sind und für S, Se oder NR⁵⁹ stehen,
- R⁵⁹: für Methyl, Ethyl, Propyl, Butyl, Pentyl, Hexyl, Heptyl, Octyl, Benzyl oder Phenyl steht, oder im Falle der Formel XVI in Ib oder Id ebenfalls für eine direkte Bindung zum Brückenglied B steht,
- B: für ein Brückenglied der Formeln -(CH₂)ₙ-, -(CH₂)ₘ-O-(CH₂)ₚ-, -(CH₂)ₘ-NR⁶⁰-(CH₂)ₚ-, -(CH₂)ₘ-C₆H₄-(CH₂)ₚ-, -O-(CH₂)ₚ-O-, -NR⁶⁰-(CH₂)ₚ-NR⁶⁰-, -(CH₂)ₘ-OCO-C₆H₄-COO-(CH₂)ₚ-, -(CH₂)ₘ-NHCO-C₆H₄-CONH-(CH₂)ₚ-, -(CH₂)ₘ-NHCONH-C₆H₄-NHCONH-(CH₂)ₚ-, -(CH₂)ₘ-OCO-(CH₂)ₜ-COO-(CH₂)ₚ-,-(CH₂)ₘ-NHCO-(CH₂)ₜ-CONH- (CH₂)ₚ-, -(CH₂)ₘ-NHCONH-(CH₂)ₜ-NHCONH-(CH₂)ₚ- steht,
- R⁶⁰: für Methyl steht,
- n: für eine ganze Zahl von 1 bis 10 steht,
- m und p: gleich sind und für eine ganze Zahl von 0 bis 2 stehen und
- t: für eine ganze Zahl von 1 bis 6 steht.

Ganz besonders bevorzugt ist eine erfindungsgemäße elektrochrome Vorrichtung, welche mindestens eine Substanz der Formel (Ia) entsprechend einer der Formeln enthält, oder mindestens eine Substanz der Formel (Ib) entsprechend einer der Formeln 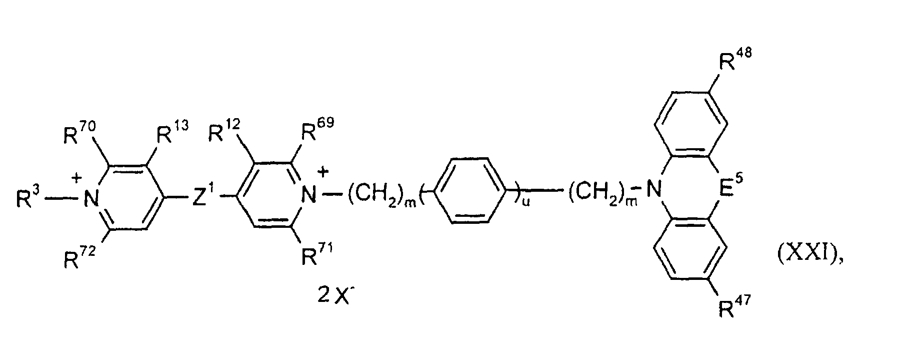 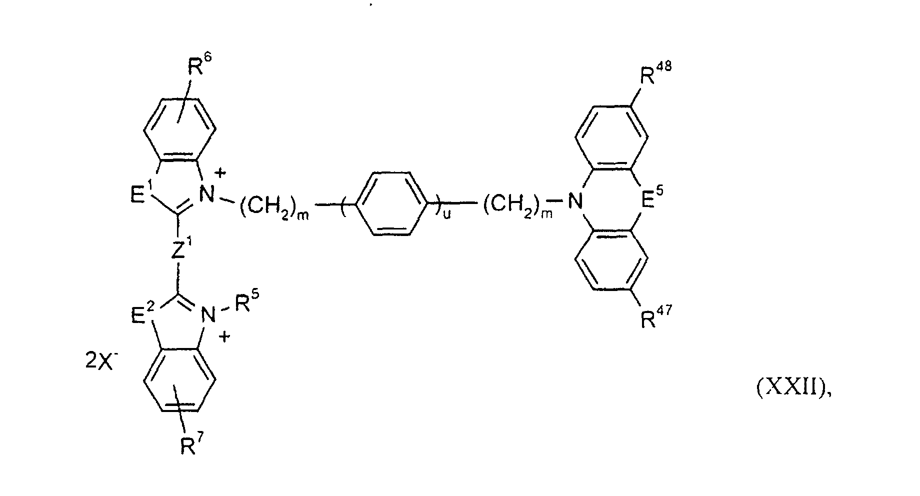 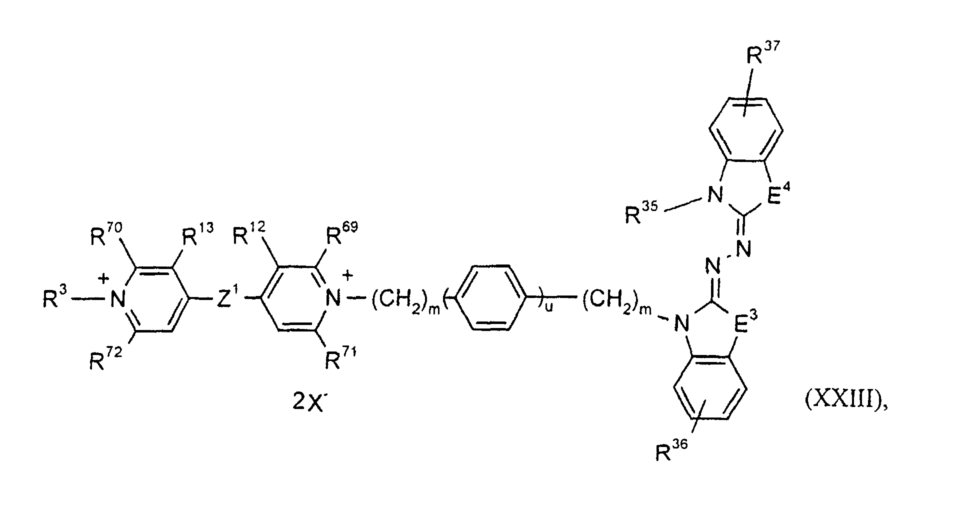 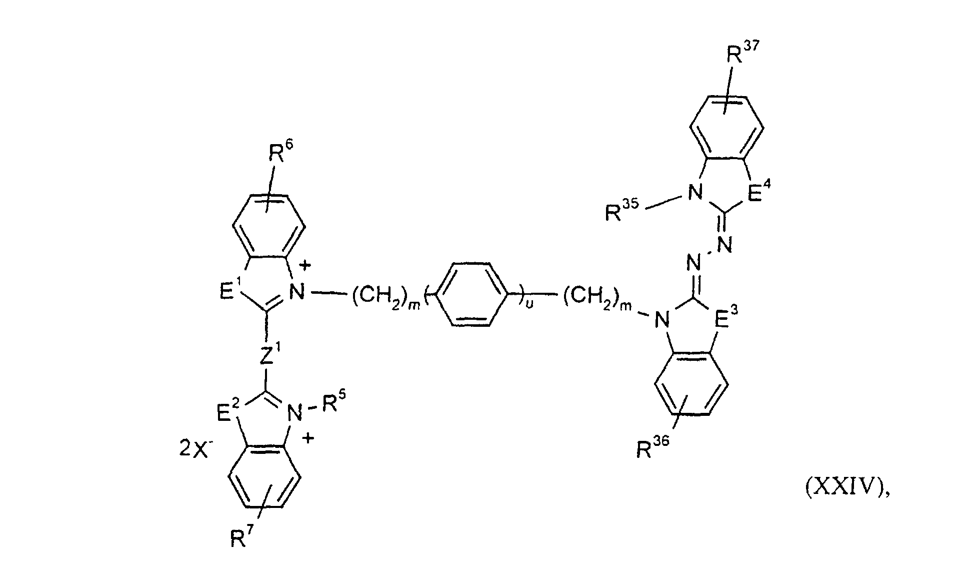 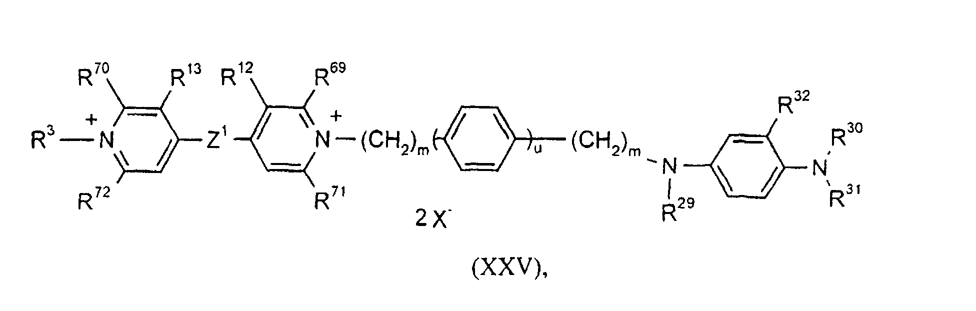 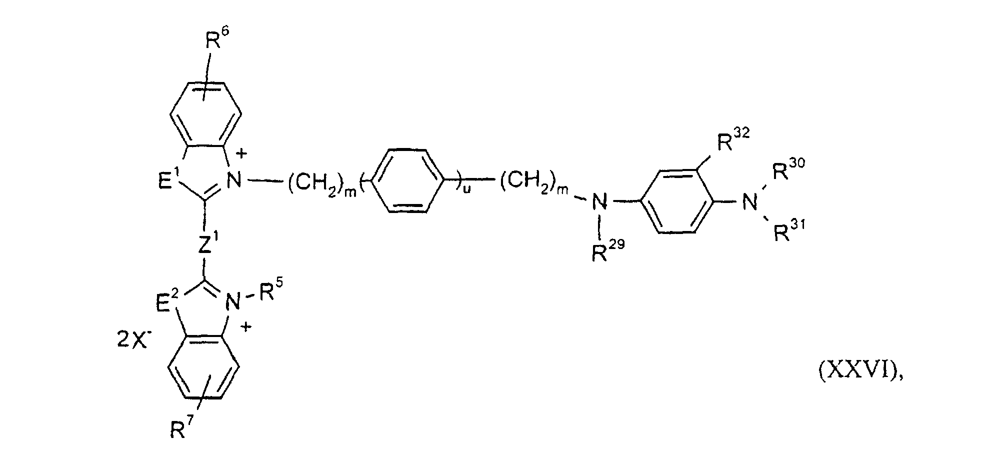 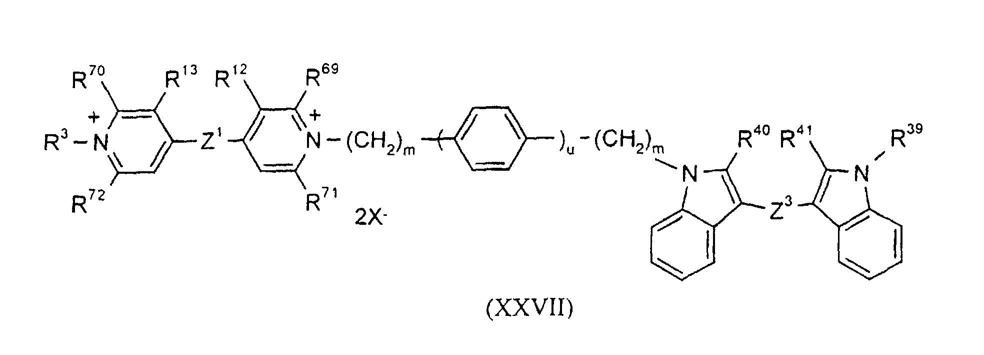 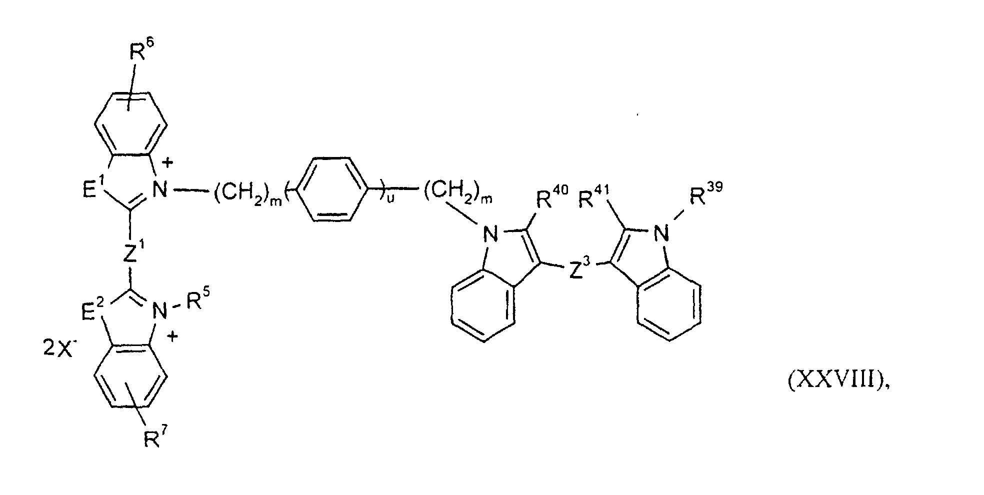 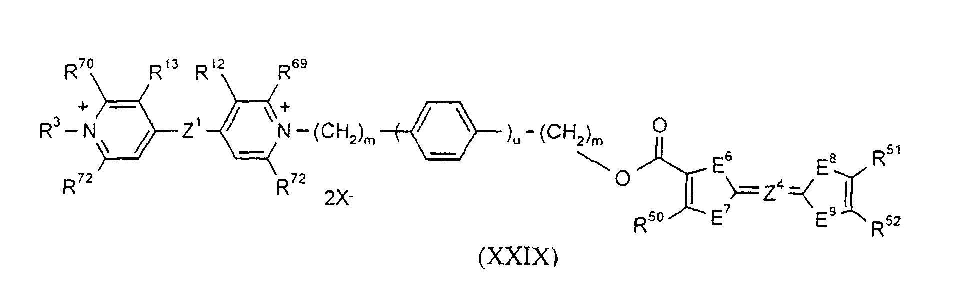 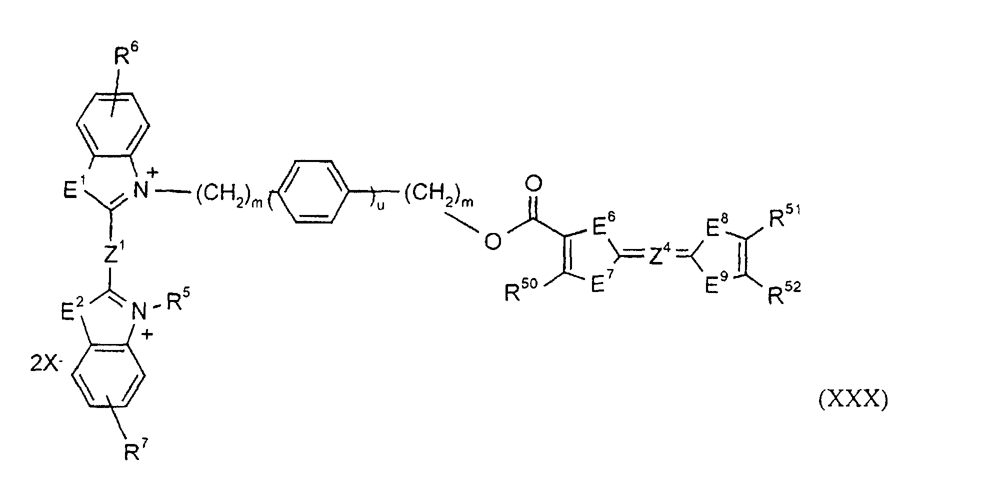 enthält, oder mindestens eine Substanz der Formel (Ib) entsprechend einer der Formeln 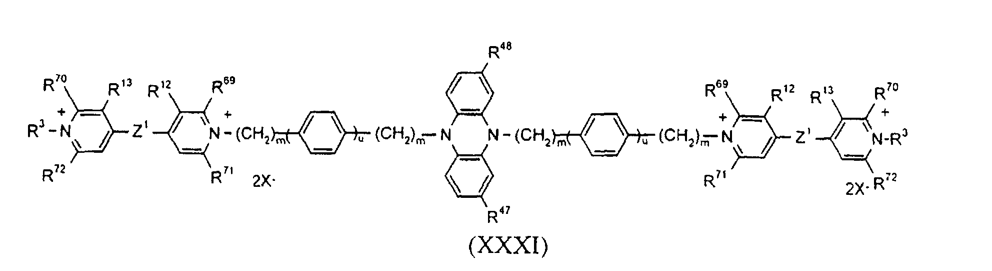 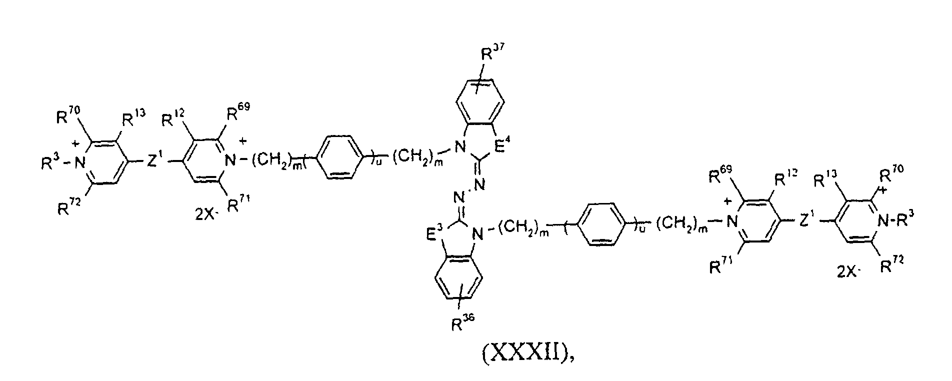 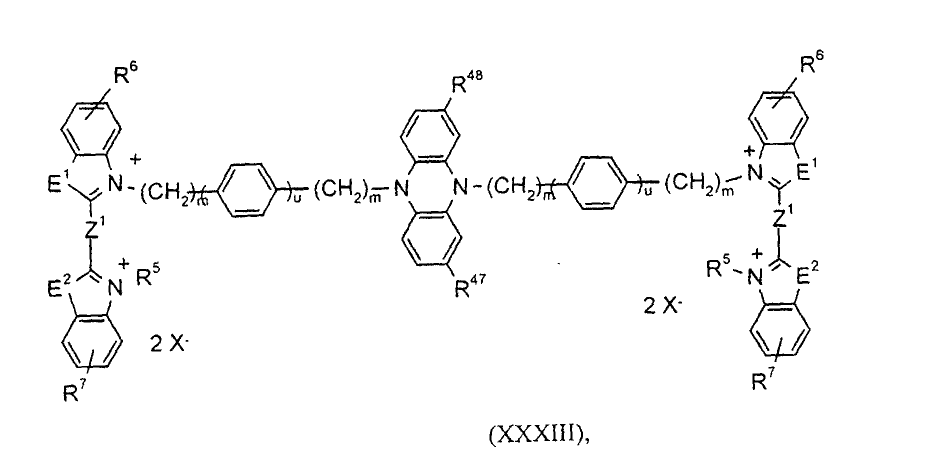 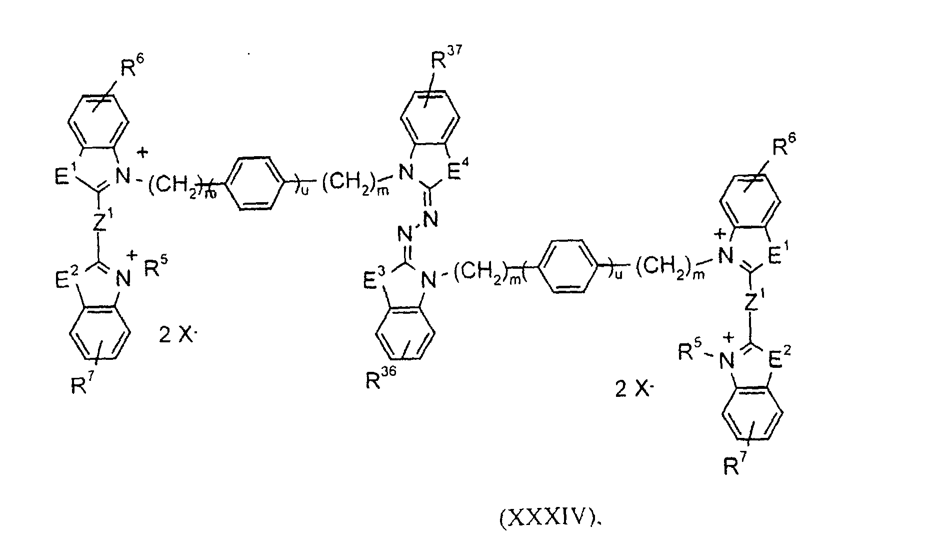 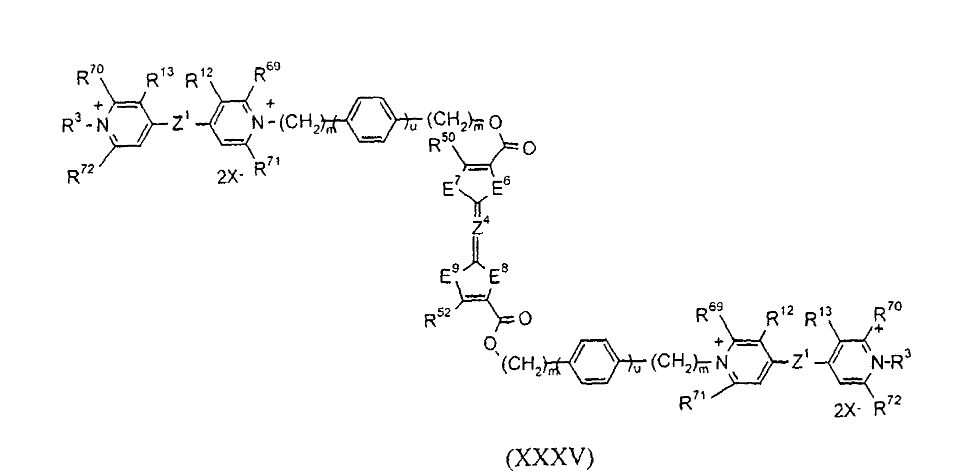 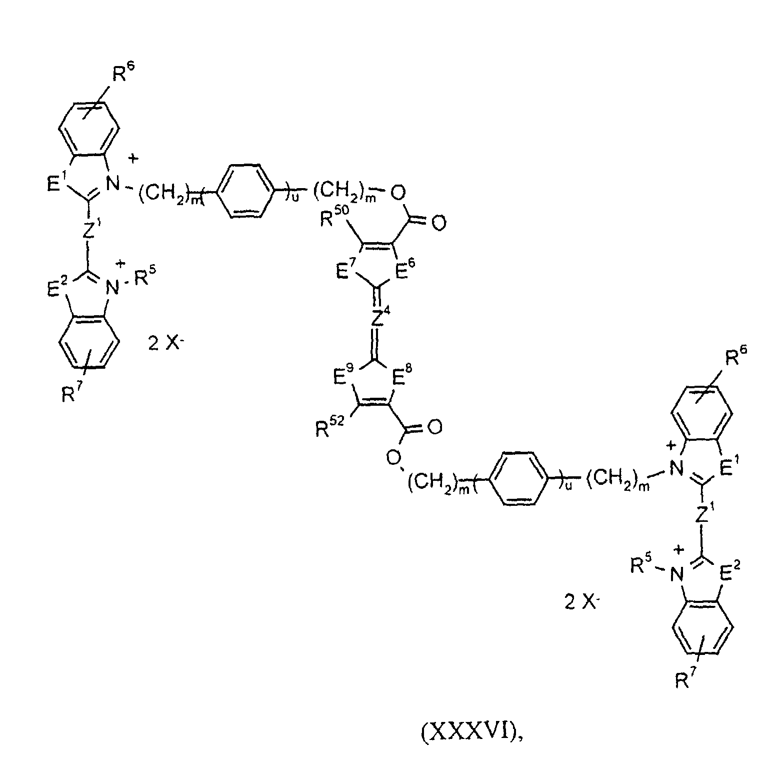 oder mindestens eine Substanz der Formel (Ic) entsprechend einer der Formeln 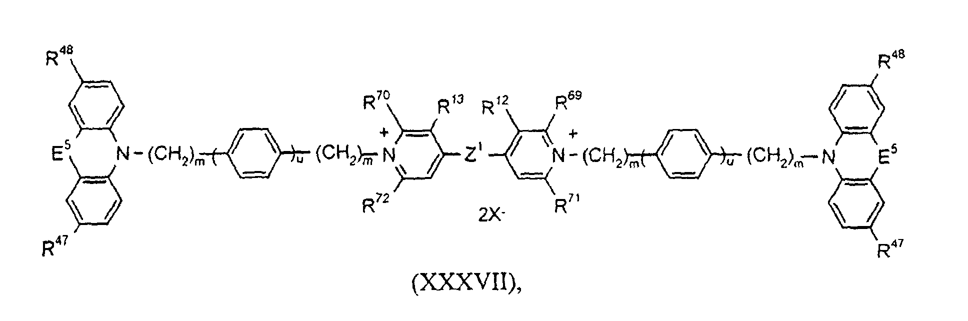 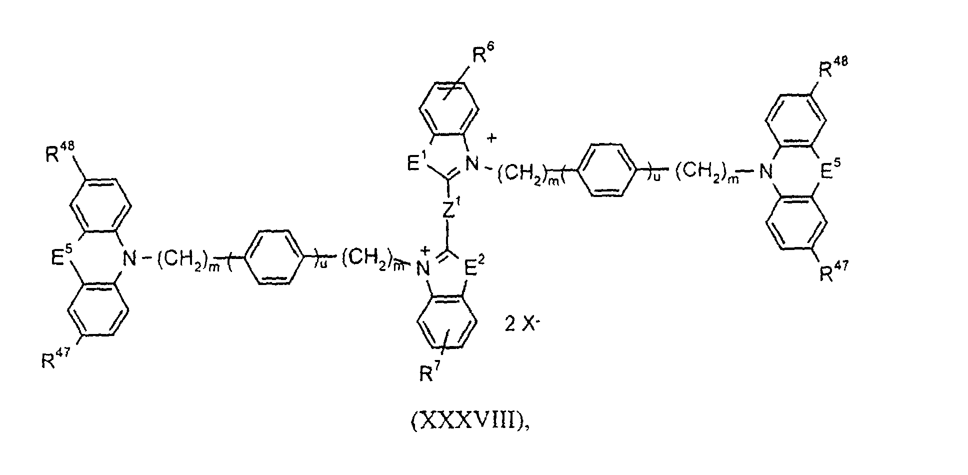 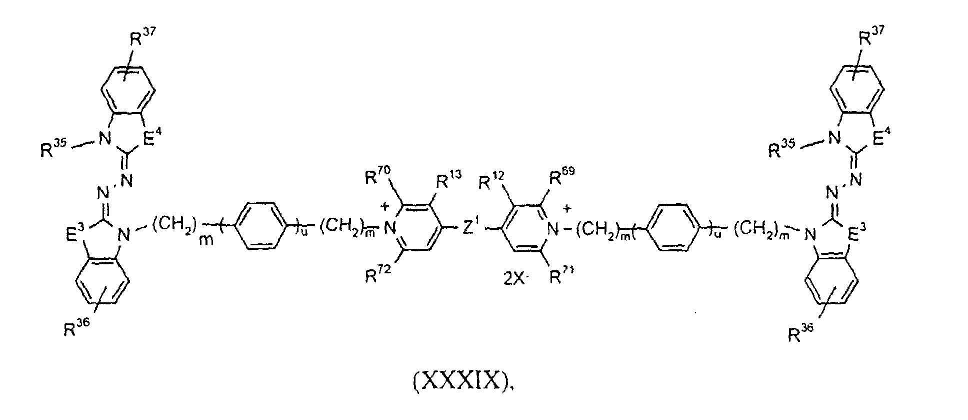 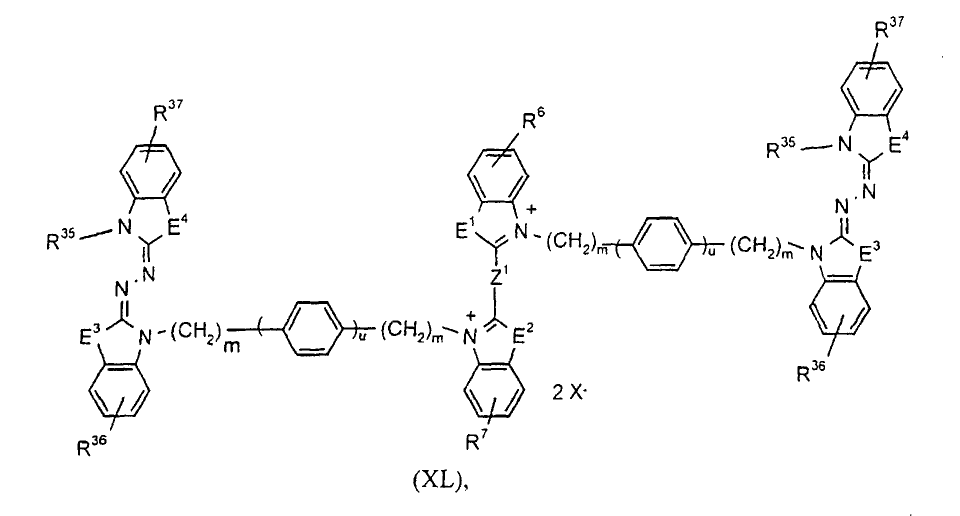 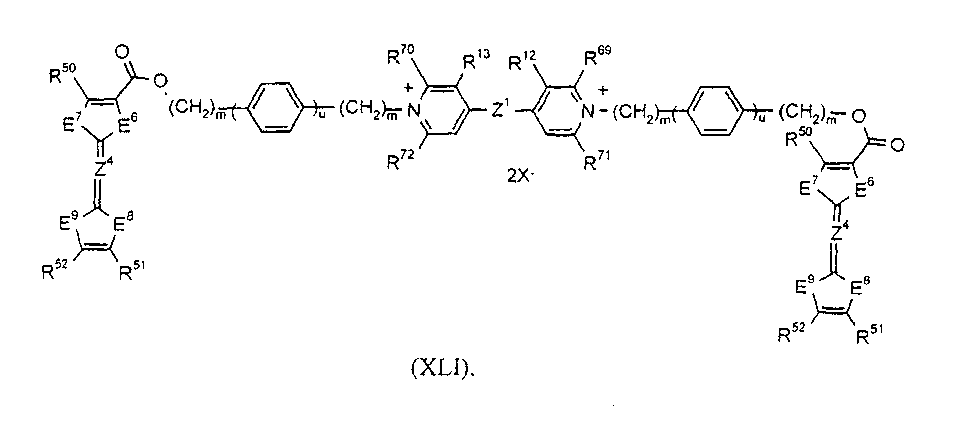 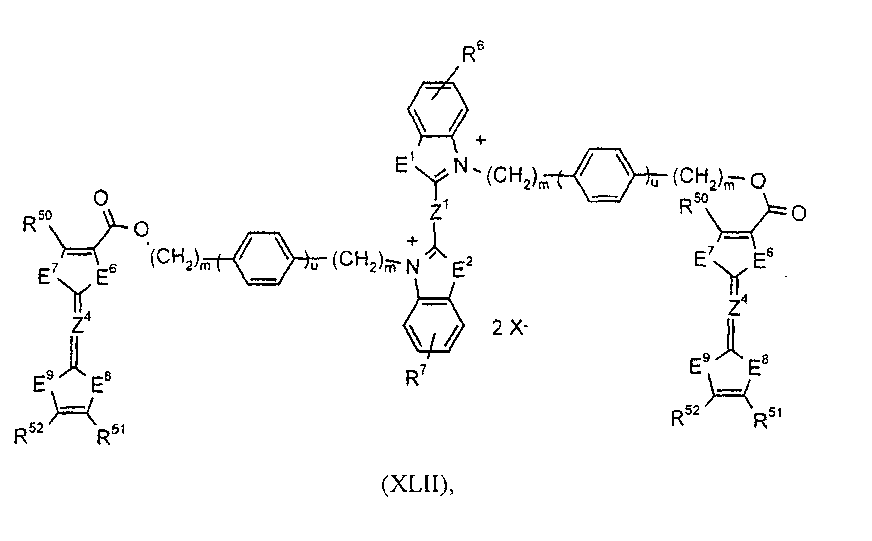 worin
- R³, R⁵, R³⁵ und R³⁹: unabhängig voneinander für Methyl, Ethyl, Propyl, Butyl, Pentyl. Hexyl oder Benzyl stehen,
- R⁶, R⁷ und R³⁶, R³⁷: paarweise gleich sind und für Wasserstoff, Methyl, Methoxy, Chlor, Cyano oder Methoxycarbonyl stehen,
- R¹² und R¹³: für Wasserstoff oder, wenn Z¹ eine direkte Bindung bedeutet, gemeinsam für eine CH=CH-Brücke stehen,
- R⁶⁹ bis R⁷²: gleich sind und für Wasserstoff oder Methyl stehen,
- E¹ und R²: gleich sind und für O oder S stehen,
- Z¹: für eine direkte Bindung oder -CH=CH- steht,
- R³², R⁴⁷ and R⁴⁸: für Wasserstoff stehen,
- E³ bis E⁵: unabhängig voneinander für O, S oder NR⁵⁹ stehen, wobei E³ und E⁴ aber gleich sind,
- R²⁹ bis R³¹ und R⁵⁹: unabhängig voneinander für Methyl, Ethyl, Propyl, Butyl, Pentyl, Hexyl oder Benzyl stehen, wobei R²⁹ bis R³¹ vorzugsweise gleich sind,
- R⁴⁰ und R⁴¹: gleich sind und für Wasserstoff, Methyl, Ethyl, Propyl, Butyl oder Phenyl stehen,
- Z³: für eine direkte Bindung, -CH=CH- oder -N=N- steht,
- R⁵⁰ bis R⁵²: unabhängig voneinander für Wasserstoff, Methyl, Methoxy, Chlor, Cyano, Methoxycarbonyl, Ethoxycarbonyl oder Phenyl stehen, vorzugsweise jedoch gleich sind,
- E⁶ bis E⁹: untereinander gleich sind und für S, Se oder NR⁵⁹ stehen,
- Z⁴: für eine direkte Doppelbindung, eine =CH-CH= oder =N-N=-Brücke steht,
- m: für eine ganze Zahl von 1 bis 5 steht,
- u: für 0 oder 1 steht und
- X⁻: für ein unter den Bedingungen redox-inertes, farbloses Anion steht.

In den obengenannten Substituentenbedeutungen sind Alkylreste, auch abgewandelte, wie z.B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie z.B. C₁- bis C₄-Alkoxy, Fluor, Chlor, Hydroxy, Cyano, C₁- bis C₄-Alkoxycarbonyl oder COOH.

Unter Cycloalkylresten werden vorzugsweise solche mit 3 bis 7 C-Atomen, insbesondere 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind vorzugsweise Phenyl- oder Naphthylreste, insbesondere Phenylreste. Sie können durch 1 bis 3 der folgenden Reste substituiert sein: C₁- bis C₆-Alkyl, C₁- bis C₆-Alkoxy, Fluor, Chlor, Brom, Cyano, Hydroxy, C₁- bis C₆₋Alkoxycarbonyl oder Nitro. Zwei benachbarte Reste können auch einen Ring bilden.

Die hier verwendete elektrochrome Flüssigkeit enthält vorzugsweise mindestens ein Lösungsmittel.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Die hier verwendete elektrochrome Flüssigkeit kann mindestens ein inertes, Leitsalz enthalten. Als inerte Leitsalze sind beispielsweise Lithium-. Natrium- und Tetraalkylammoniumsalze geeignet, insbesondere letztere. Die Alkylgruppen können zwischen 1 und 18 C-Atome enthalten und gleich oder verschieden sein. Bevorzugt ist Tetrabutylammonium. Als Anionen zu diesen Salzen, aber auch als Anionen X^{⊖} in den Formeln (I), (II), (IV), (VII) kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert.-Butylbenzolsulfonat, Dodecylbenzolsulfonat, Trfluormethylbenzolsulfonat, Hexafluorophosphat, Hexafluorarsenat, Hexafluorosilicat, 7,8- oder 7,9-Dicarba-nido-undecaborat(1-) or (2-), die gegebenenfalls an den B- und/oder C-Atomen durch eine oder zwei Methyl-, Ethyl-, Butyl- oder Phenyl-Gruppen substituiert sind, Dodecahydrodicarbadodecaborat(2-) oder B-Methyl-C-phenyl-dodecahydro-dicarbadodecaborat(1-).

Im Falle mehrwertiger Anionen steht X⁻ für ein Äquivalent, z.B. für ½ SiF₆²⁻.

Die Leitsalze werden vorzugsweise im Bereich 0 bis 1 molar eingesetzt.

Als weitere Zusätze zu der elektrochromen Flüssigkeit können Verdicker eingesetzt werden, um die Viskosität der Flüssigkeit zu steuern. Das kann Bedeutung haben zur Vermeidung von Segregation, d.h. der Bildung von streifiger oder fleckiger Farbbildung bei längerem Betrieb einer die hier verwendete etektrochrome Flüssigkeit enthaltenden elektrochromen Vorrichtung im eingeschalteten Zustand, und zur Steuerung der Ausbleichgeschwindigkeit nach Abschalten des Stroms.

Als Verdicker eignen sich alle für diese Zwecke üblichen Verbindungen wie z.B. Polyacrylat, Polymethacrylat (Luctite L®), Polycarbonat und Polyurethan.

Die elektrochrome Flüssigkeit kann auch gelförmig sein.

Als weitere Zusätze für die elektrochrome Flüssigkeit kommen UV-Absorber zur Verbesserung der Lichtechtheit in Frage. Beispiele sind Uvinul® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24^{TM} (2,2'-Dihydroxy-4-methoxybenzophenon, American Cyanamid Company), UVINUL® 3035 (Ethyl-2-cyano-3,3-diphenylacrylat, BASF), Uvinul® 3039 (2-Ethylhexyl-2-cyano-3,3-diphenylacrylat, BASF), UVINUL® 3088 (2-Ethylhexyl-p-methoxycinnamat, BASF), CHIMASSORB® 90 (4-Methoxy-2-hydroxibenzophenon, Ciba).

Die UV-Absorber werden im Bereich 0,01 bis 2 mol/l, vorzugsweise 0,04 bis 1 mol/l eingesetzt und können auch gemischt sein.

Die hier verwendete elektrochrome Flüssigkeit enthält die Substanzen der Formel (I), insbesondere der Formeln (Ia) bis (Id), jeweils in einer Konzentration von mindestens 10⁻⁴ mol/l, vorzugsweise 0,001 bis 1 mol/l Es können auch Mischungen mehrerer elektrochromer Substanzen der Formel (I) eingesetzt werden.

Die erfindungsgemäße elektrochrome Vorrichtung wird beispielsweise folgendermaßen gebaut. Dabei ist zwischen drei Grundtypen zu unterscheiden:
- Typ 1:: vollflächige elektrochrome Vorrichtung, beispielsweise für Fensterscheiben.
- Typ 2:: elektrisch abblendbare verspiegelte Vorrichtungen, beispielsweise Autospiegel.
- Typ 3:: elektrochrome Anzeigevorrichtungen, beispielsweise Segment- oder Matrixanzeigen.

Bei Typ 1 werden Glas- oder Kunststoffscheiben verwendet, die auf einer Seite vollflächig mit einer transparenten leitfähigen Schicht beschichtet sind.

Diese leitfähige Schicht besteht beispielsweise aus Indium-Zinn-Oxid (ITO), Antimon- oder Fluor-dotiertem Zinnoxid, Antimon- oder Aluminium-dotiertem Zinkoxid, Zinnoxid oder leitfähigen organischen Polymeren wie beispielsweise gegebenenfalls substituierte Polythienyle, Polypyrrole, Polyaniline, Polyacetylen. Man erhält so eine transmissive elektrochrome Vorrichtung, die im durchfallenden Licht betrachtet werden kann.

Bei Typ 2 werden Scheiben wie bei Typ 1 verwendet. Zusätzlich ist eine der beiden Scheiben verspiegelt. Diese Verspiegelung kann auf der zweiten, nicht leitfähig beschichteten Seite einer der beiden Platten aufgebracht sein. Sie kann jedoch auch statt der erwähnten leitfähigen Beschichtung auf eine der beiden Platten aufgebracht sein und somit die Funktion der leitfähigen Schicht und der Verspiegelung gleichzeitig erfüllen. In diesem Fall kann die Platte auch nichttransparent sein. Zur Verspiegelung können Silber, Chrom, Aluminium, Palladium oder Rhodium oder auch Palladium auf Chrom oder Rhodium auf Chrom oder andere bekannte Materialien verwendet werden. Man erhält so eine reflektierende elektrochrome Vorrichtung.

Bei Typ 3 kann die Bauweise wie bei Typ 1 oder 2 gewählt werden. Man erhält so eine transmissive oder eine reflektierende elektrochrome Anzeigevorrichtung. In jedem Fall ist jedoch mindestens eine der beiden leitfähigen Schichten beziehungsweise beide in elektrisch voneinander getrennte Segmente aufgeteilt, die einzeln kontaktiert sind. Es kann aber auch nur eine der beiden Platten leitfähig beschichtet und in Segmente aufgeteilt sein. Die Trennung der Segmente kann beispielsweise erfolgen durch mechanisches Entfernen der leitfähigen Schicht beispielsweise durch Ritzen, Kratzen, Schaben oder Fräsen oder auf chemischem Wege beispielsweise durch Ätzen mittels beispielsweise einer salzsauren Lösung von FeCl₂ und SnCl₂. Diese Entfernung der leitfähigen Schicht kann über Masken, z. B. solchen aus Photolack, örtlich gesteuert werden. Es können aber auch die elektrisch getrennten Segmente durch gezieltes, z.B. mittels Masken, Aufbringen, z.B. Sputtern oder Drucken, der leitfähigen Schicht hergestellt werden. Die Kontaktierung der Segmente erfolgt beispielsweise mittels feiner Streifen aus leitfähigem Material, womit das Segment mit einem Kontakt am Rande der elektrochromen Vorrichtung elektrisch leitend verbunden ist. Diese feinen Kontaktstreifen können entweder aus dem gleichen Material bestehen wie die leitfähige Schicht selbst und beispielsweise bei deren Aufteilung in Segmente wie oben beschrieben mit hergestellt werden. Sie können aber auch z.B. zur Verbesserung der Leitfähigkeit aus anderem Material wie feinen metallischen Leitern, beispielsweise aus Kupfer oder Silber, bestehen. Auch eine Kombination aus metallischem Material und dem Material der leitfähigen Beschichtung ist möglich. Diese metallischen Leiter können beispielsweise entweder in feiner Drahtform aufgebracht, z.B. aufgeklebt, werden oder aber aufgedruckt werden. Alle diese eben beschriebnenen Techniken sind im allgemeinen aus der Herstellung von Flüssigkristalldisplays (LCD) bekannt.

Die Anzeigen können im Durchlicht oder auch reflektiv über eine Verspiegelung betrachtet werden.

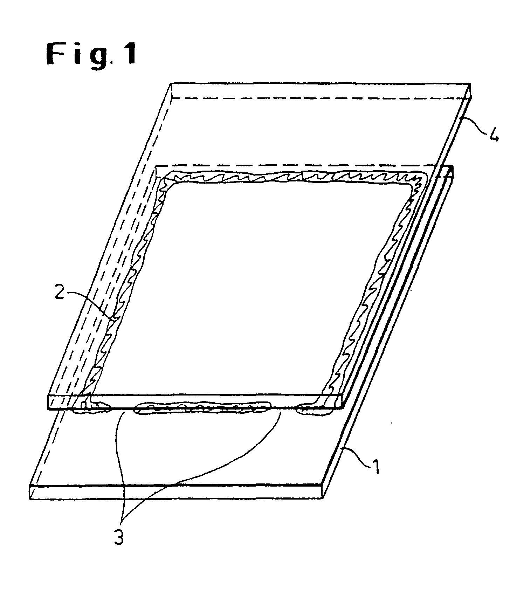

Bei Typ 1 bis 3 wird auf eine der beiden Platten (1) (s. Abbildung 1) auf der leitfähig beschichteten Seite ein Kleber, der als Abstandshalter z.B. Glaskügelchen enthält, so aufgebracht, beispielsweise mit einer Spritze oder einer automatischen Dosiervorrichtung, daß eine Kleberaupe (2) entsteht, die mindestens eine Einfüllöffnung (3) freiläßt. Die Einfüllöffnung/Einfüllöffnungen kann/können auch auf einer anderen Kante der Platte (1) angebracht sein. Sie können auch auf zwei verschiedenen Kanten, beispielsweise gegenüberliegenden Kanten, angebracht sein. Dann wird die zweite Platte (4) mit der Seite ihrer leitfähigen Beschichtung auf die Kleberaupe gelegt und angedrückt. Durch die Abstandshalter wird der Schichtabstand auf den gewünschten Wert eingestellt. Dann wird diese Zelle entsprechend dem gewählten Klebertyp ausgehärtet, wie oben beschrieben. Diese Aushärtung kann thermisch, photochemisch oder photochemisch initiiert thermisch erfolgen.

Unter Inertgasatmosphäre, z.B. Stickstoff oder Argon, wird die Zelle über die Einfüllöffnungen (3) mit der hier verwendeten elektrochromen Flüssigkeit, die selbst sauerstofffrei ist und entweder entgast oder mit dem Inertgas beaufschlagt ist, befüllt. Die Befüllung kann beispielsweise mit einer Pipette oder einer Spritze erfolgen, wobei das verdrängte Gasvolumen über eine zweite Öffnung (3) entweicht. Die Befüllung kann aber auch so erfolgen, daß die Zelle und die elektrochrome Lösung in ein evakuierbares Gefäß eingebracht werden. Das Gefäß wird evakuiert. Die Zelle wird mit ihrer Einfüllöffnung (3) (bei mehreren Öffnungen müssen alle auf einer Kante liegen) nach unten in die elektrochrome Flüssigkeit eingetaucht. Das Gefäß wird nun mit Inertgas belüftet, wobei die elektrochrome Flüssigkeit in die Zelle steigt und diese schließlich, bis auf eventuell eine kleine Gasblase, komplett ausfüllt.

Unabhängig von der Befüllmethode wird die gefüllte Zelle unter Inertgas an den Befüllöffnungen (3) von eventuell anhaftender elektrochromer Flüssigkeit gereinigt. z.B. mit einem Papiertuch. Dann wird/werden die Öffnung/en (3) mit einem für den Zellenverschluß vorgesehenen Kleber verschlossen. Der Kleber wird beispielsweise mit einer Spritze oder einer automatischen Dosiervorrichtung auf die Öffnung (3) und eventuell ihre nähere Umgebung aufgebracht, eventuell auch in die Öffnung (3) eingedrückt. Dabei kann so vorgegangen werden, daß sich in der Einfüllöffnung zwischen elektrochromer Flüssigkeit und Kleber eine kleine Gasblase befindet oder aber, daß eine solche Blase vermieden wird. Anschließend wird der Kleber wie oben für diese Kleber beschrieben ausgehärtet. Dies kann je nach Klebertyp allein mit Licht oder aber durch Licht initiiert thermisch erfolgen. "Thermisch" bedeutet hier eine nichtphotochemische Aushärtung, die vorzugsweise bei Raumtemperatur oder der Temperatur, die bei der Befüllung und der Kleberauftragung herrschte, erfolgen soll. Eine Erwärmung während des Härtungsprozesses, auch bei reiner Lichthärtung, soll ausgeschlossen werden, da sich dabei der Zellinhalt ausdehnen kann und somit der noch nicht ausgehärtete Verschlußkleber abgehoben werden kann und ein sicherer Verschluß somit verhindert wird.

Der Abstand zwischen den beiden Platten (1) und (4) beträgt im allgemeinen 0,005 bis 2 mm, vorzugsweise 0,01 bis 0,5 mm.

Spezielle Ausführungsformen der oben genannten Typen 1 bis 3 können beispielsweise die folgenden sein, die ebenfalls Gegenstand der Erfindung sind:
- Typ 1:: aus dem Bereich Lichtschutz/Lichtfilter: Fensterscheiben für z.B. Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art.
aus dem Bereich Sicherheit/Geheimhaltung: Trennscheiben für z.B. Raumteiler in z.B. Büros, Straßenfahrzeugen, Flugzeugen, Eisenbahnen, Sichtschutzscheiben an z.B. Bankschaltern, Türverglasungen, Scheiben für z.B. Motorrad- oder Pilotenhelme.
aus dem Bereich Design: Verglasung von Backöfen, Mikrowellengeräten, anderen Haushaltsgeräten, Möbeln.
- Typ 2:: Spiegel jeglicher Art, z.B. Rückspiegel, für z.B. Straßenfahrzeuge, Eisenbahnen, insbesondere plane, sphärische, asphärische Spiegel und Kombinationen daraus, z.B. sphärisch/asphärisch, Spiegelverglasung in Möbeln.
- Typ 3:: Anzeigenvorrichtungen jeglicher Art, z.B. Segment- oder Matrixanzeigen, z.B. für Uhren, Computer, Elektrogeräte, Elektronikgeräte wie Radios, Verstärker, Fernseher, CD-Player etc., Zielanzeige in Bussen und Zügen, Abfahrts- oder Abflugsanzeigen in Bahnhöfen und Flughäfen, Flachbildschirme, alle Anwendungen, die unter Typ 1 und 2 genannt sind, die mindestens eine schaltbare, statische oder variable Anzeigevorrichtung enthalten, z.B. Trennscheiben, die Anzeigen wie z.B. "Bitte nicht stören", "Schalter nicht besetzt" enthalten, z.B. Auto-Spiegel, die Anzeigen beliebiger Art enthalten wie z.B. Anzeige der Temperatur, Störungen im Fahrzeug (z.B. Öltemperatur, offene Türen), Zeit, Himmelsrichtung etc.

Die erfindungsgemäße selbstlöschende einzellige elektrochrome Vorrichtung kann zusätzlich zu den oben beschriebenen elektrochromen Substanzen der Formeln (I), insbesondere den Formeln (Ia) bis (Id), auch andere enthalten, wie sie beispielsweise in US-P 4,902,108, Topics in Current Chemistry, Vol. 92, S. 1-44 (1980) und Angew. Chem. 90, 927 (1978) beschrieben sind. Solche elektrochromen Substanzen entstammen beispielsweise den oben unter den Formeln (II) bis (XX) angegebenen Gruppen, wobei dann keiner der angeführten Reste die Bedeutung "direkte Bindung zur Brücke B" besitzen kann. Weitere geeignete elektrochrome Mischkomponenten sind beispielsweise Tetrazoliumsalze und Salze oder Komplexe von Metallen wie z.B. [Fe(C₅H₅)₂]^{0/+}. Eine Zumischung solcher Redoxsysteme kann beispielsweise vorteilhaft sein, um bei der erfindungsgemäßen elektrochromen Vorrichtung den Farbton, z.B. des Displays, im eingeschalteten Zustand zu korrigieren oder zu intensivieren.

### Beispiele

### Beispiel 1

Auf eine mit ITO beschichtete Glasplatte (1) wurde gemäß Abbildung 1 ein Ring (2) aus einer Mischung aus einem Zweikomponenten-Epoxi-Kleber, KÖRAPOX® 733 der Fa. Kömmerling, Pirmasens (Komponente A: Epoxid der Formel (CIII) mit m statistisch = 2, mit Aerosil thixotropiert, Viskosität = 20.000 mPas; Komponente B: Polyaminoimidazolin, Tetraethylenpentamin, Triethylentetramin, Benzylalkohol, α,α'-Diamino-m-xylol, Phenol, Viskosität 3500 mPas; A:B = 2:1 Gewichtsteile) und 3 % Glaskugeln vom Durchmesser 200 mm als Abstandshalter aufgetragen, aus dem zwei Einfüllöffnungen (3) ausgespart wurden. Auf diese Kleberaupe wurde eine zweite mit ITO beschichtete Glasplatte (4) mit ihrer Beschichtungsseite aufgelegt. Nach 5 min bei Raumtemperatur wurde der Kleber bei 150°C während 20 min ausgehärtet. In einer Glove-box wurde unter Stickstoffatmosphäre eine Lösung mit einer Pipette eingefüllt, die 0,02 molar an der elektrochromen Verbindung der Formel 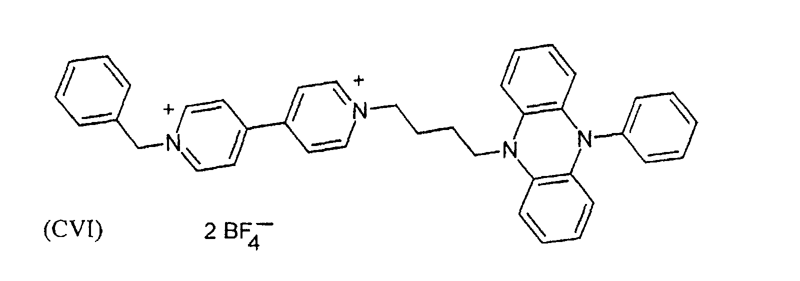 und 0,4 molar an UV-Absorber der Formel 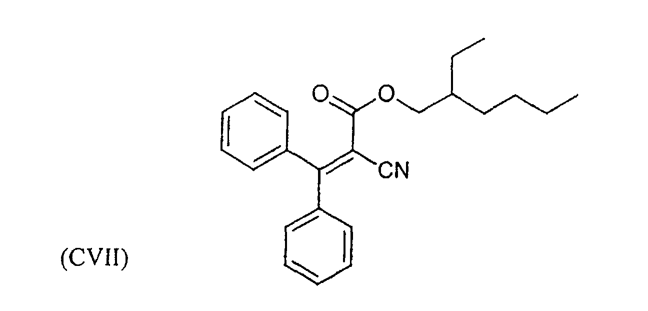 in wasserfreiem, sauerstofffreiem Propylencarbonat war. Die Befüllöffnungen (3) wurden mit einer Mischung aus photochemisch initiierbarem Epoxikleber DELO-Katiobond® 4594, DELO Industrieklebstoffe, Landsberg, verdickt mit 5 % Kieselgel-Aerosil oder dem bereits thixotropierten DELO-Katiobond® VE 4218, DELO-Industrieklebstoffe, Landsberg, verschlossen. Anschließend wurde 10 min mit Tageslicht in der Nähe eines Fensters belichtet und bei Raumtemperatur über Nacht ausgehärtet.

Alternativ konnte auch diese Belichtung des DELO-Klebers mit einer Photoblitzlampe oder durch 1-minütiges Belichten mit der Lampe DELOLUX® 03, DELO Industrieklebstoffe, Landsberg, in einem Abstand von 30 cm erfolgen. Die Aushärtung erfolgte in jedem Fall über Nacht bei Raumtemperatur.

Die Lösung in der Zelle war praktisch farblos. Nach Anlegen einer Spannung von 0,9 V färbte sich die Lösung intensiv grünlich blau mit Maxima bei 466 und 607 nm. Nach Abschalten der Stromzufuhr und Kurzschließen entfärbte sich der Inhalt innerhalb von 10 s wieder.

Nach über 100.000 solchen Cyclen wurde keine Veränderung festgestellt.

### Beispiel 2

Es wurde wie in Beispiel 1 vorgegangen, nur wurde statt des 2-Komponenten-Epoxi-Klebers die Zelle mit einer Mischung aus dem photochemisch initiierbarem Epoxikleber DELO-Katiobond® 4594 oder DELO-Katiobond® VE 4218, DELO Industrieklebstoffe, Landsberg, und 3 % Glaskugeln vom Durchmesser 200 mm aufgebaut. Die Aushärtung erfolgte durch 10-minütiges Belichten mit Tageslicht in der Nähe eines Fensters und anschließend während 20 min bei 105°C ohne Belichtung. Alternativ konnte auch diese Belichtung mit einer Photoblitzlampe oder durch 1-minütiges Belichten mit der Lampe DELOLUX® 03, DELO Industrieklebstoffe, Landsberg, in einem Abstand von 30 cm erfolgen. Nach dem Befüllen der Zelle wie in Beispiel 1 beschrieben wurden die Einfüllöffnungen (3) mit einer Mischung aus 3 Teilen Trimethylolpropan-triacrylat, 5 Teilen Polyethylenglycol-400-diacrylat und 0,5 Gewichtsprozent UV-Initiator Darocur® 1173, E. Merck, Darmstadt, verschlossen. Durch 1-minütiges Belichten mit der Lampe DELOLUX® 03, DELO Industrieklebstoffe, Landsberg, in einem Abstand von 30 cm wurde der Kleber ausgehärtet.

Die Eigenschaften der Zelle waren wie unter Beispiel 1 beschrieben.

### Beispiel 3

Es wurde wie in Beispiel 1 vorgegangen, nur wurden die Befüllöffnungen (3) mit dem photochemisch härtbaren Acrylatkleber DELO-Photobond® 4468 (nichtthixotropierte Form mit Viskosität = 7000 mPas), DELO Industrieklebstoffe, Landsberg, verschlossen. Anschließend wurde 1 min unter einem Stickstoffstrom mit der Lampe DELOLUX® 03, DELO Industrieklebstoffe, Landsberg, in einem Abstand von 8 cm belichtet und bei Raumtemperatur über Nacht in der Glove-box ausgehärtet.

Die Eigenschaften der Zelle waren wie unter Beispiel 1 beschrieben.

### Beispiel 4

Es wurde wie in Beispiel 3 vorgegangen, nur wurden die Befüllöffnungen (3) mit dem photochemisch härtbaren Acrylatkleber DELO-Photobond® 4497 (thixotropierte Form von 4468 mit Viskosität = 30000 mPas), DELO Industrieklebstoffe, Landsberg, verschlossen. Anschließend wurde 1 min unter einem Stickstoffstrom mit der Lampe DELOLUX® 03, DELO Industrieklebstoffe, Landsberg, in einem Abstand von 8 cm belichtet und bei Raumtemperatur über Nacht in der Glove-box ausgehärtet.

Die Eigenschaften der Zelle waren wie unter Beispiel 1 beschrieben.

### Beispiel 5

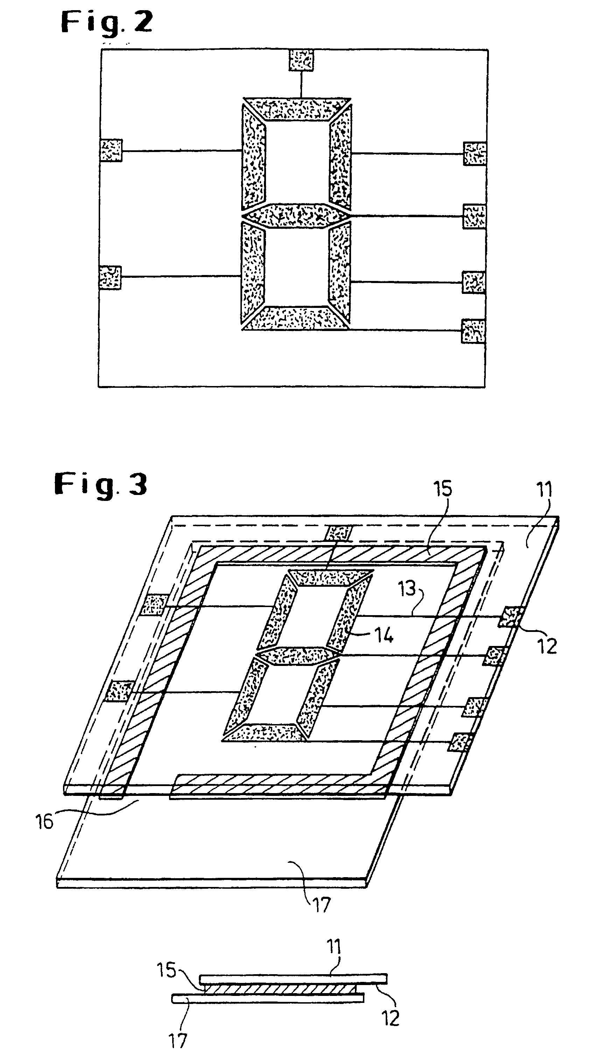

Eine mit ITO beschichtete Glasplatte wurde mit einem handelsüblichen Photolack, z.B. Positiv 20 der Firma Kontakt Chemie, Iffezheim, auf der beschichteten Seite besprüht und im Dunkeln bei 50 bis 70°C während 1 h getrocknet. Dann wurde die Lackschicht mit einer Folie bedeckt, die gemäß Abbildung 2 schwarze Segmente in einer transparenten Umgebung enthielt. Diese Folie wurde gemäß einer am Computer hergestellten Vorlage mit einem Laserdrucker bedruckt. Durch diese Folie wurde nun die Photolackschicht mit UV-Licht (aus einer Quecksilber-Lampe, z.B. HBO 200W/2 der Firma Osram oder aus einer Xenon-Hochdrucklampe XBO 75W/2 der Firma Osram) während 1 bis 5 min belichtet. Die Folie wurde entfernt und die Lackschicht in einem Natronlaugebad (7 g Natriumhydroxid pro Liter Wasser) so behandelt, daß die belichteten Stellen abgespült wurden. Nun wurde die so vorbereitete Glasplatte in ein Bad aus 67 g FeCl₂ x 4 H₂O, 6 g SnCl₂ x 2 H₂O, 104 ml Wasser und 113 ml 37-gew.-proz. Salzsäure gelegt, wodurch die ITO-Schicht an den lackfreien, ehemals belichteten Stellen abgelöst wurde. Die verbliebene Lackschicht wurde mit Aceton entfernt. Man erhielt so eine Glasplatte (11), die Segmente (14), Leiterverbindungen (13) und Kontakte (12) trug.

Eine Mischung aus dem photochemisch initiierbaren Epoxikleber DELO-Katiobond® 4594 oder VE 4218, DELO Industrieklebstoffe, Landsberg, und 3 % Glaskugeln vom Durchmesser 50 mm wurde ringförmig (15) auf die mit ITO-beschichtete Seite einer zweiten Glasplatte (17) aufgetragen, wobei eine Öffnung (16) ausgespart wurde. Nun wurde die wie oben beschrieben hergestellte geätzte Glasplatte (11) so auf die Kleberaupe gelegt, daß die ITO-Schichten der beiden Platten (11) und (17) einander zugewandt waren und eine Geometrie wie in Abbildung 3 gezeigt entstand. Die Aushärtung des Klebers erfolgte durch 10-minütiges Belichten mit Tageslicht in der Nähe eines Fensters und anschließend während 20 min bei 105°C ohne Belichtung.

Nun wurde die Zelle unter Stickstoff- oder Argonatmosphäre mit der Öffnung (16) nach unten senkrecht so in eine Schale gestellt, die eine Lösung, die 0,06 molar an der elektrochromen Verbindung der Formel 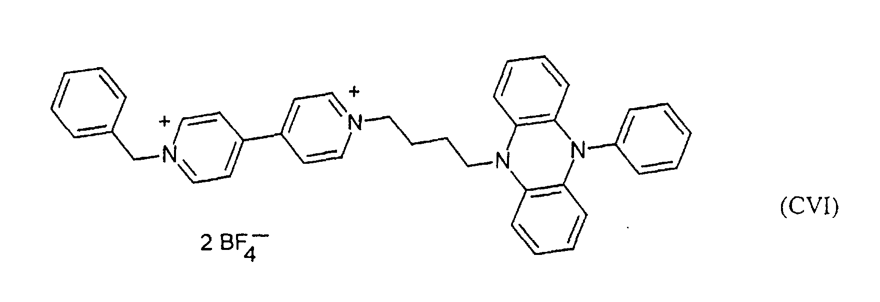 in wasserfreiem, sauerstofffreiem Propylencarbonat war, enthielt, daß die Öffnung (16) sich unterhalb des Flüssigkeitsspiegels befand. Die Schale mit der Zelle wurde in einen Exsiccator gestellt und auf 0.05 mbar evakuiert. Anschließend wurde der Exsiccator vorsichtig mit Stickstoff oder Argon belüftet. Dabei stieg die elektrochrome Lösung in die Zelle hinein und füllt bis auf eine kleine Blase das ganze Volumen aus. Die Zelle wurde aus der Lösung entnommen, unter Stickstoff- oder Argonatmosphäre an der Öffnung (16) z.B. mit einem Papiertuch abgeputzt und anschließend mit dem photochemisch initüerbaren Epoxikleber DELO-Katiobond® 4594, DELO Industrieklebstoffe, Landsberg, verdickt mit 2 % Kieselgel-Aerosil, verschlossen. Anschließend wurde 10 min mit Tageslicht in der Nähe eines Fensters belichtet und bei Raumtemperatur über Nacht ausgehärtet.

Durch Anlegen einer Spannung von 0.8 V an die Kontakte (12) der Segmente als Kathode und die nichtgeätzte zweite Platte (17) als Anode bildete sich rasch ein tief grünlich blaues Bild der kontaktierten Segmente aus. Es konnten so alle mittels 7 Segmenten darstellbaren Buchstaben und Ziffern tief grünlich blau auf blaßgelbem Untergrund erzeugt werden. Durch Abschalten der Spannung und Kurzschließen der Kontakte verschwand das Bild rasch wieder.

### Beispiel 6 (Vergleichsbeispiel)

Es wurde vorgegangen wie in Beispiel 1, jedoch wurde beim Bau der Zelle der Kleber KÖRAPOX® 733 nicht bei 150°C ausgehärtet, sondern bei Raumtemperatur über Nacht.

Wurde die Zelle mit 0.9 V geschaltet, so färbte sich die Lösung intensiv grünlich blau. Nach Abschalten der Spannung und Kurzschließen verschwand diese Färbung wieder. Im Verlauf von mehreren Tagen beim bloßen Liegenlassen oder auch beim Betrieb unter Spannung baute sich allmählich eine blaue Restfärbung auf, die im spannungslosen, kurzgeschlossenen Zustand beobachtet werden konnte.

### Beispiel 7 (Vergleichsbeispiel)

Es wurde vorgegangen wie in Beispiel 1, jedoch wurde zum Verschluß der Zelle der Zweikomponenten-Epoxi-Kleber KÖRAPOX® 733 der Firma Kömmerling, Pirmasens, (Zusammensetzung s. Beispiel 1) verwendet. Die Aushärtung erfolgte über Nacht bei Raumtemperatur. Dabei bildete sich in der Umgebung der Einfüllöffnungen (3) eine tiefblaue Färbung der elektrochromen Lösung aus, die sich allmählich über die ganze Zelle verteilte und nicht mehr verschwand.

Wurde die Zelle mit 0.9 V geschaltet, so färbte sich die Lösung intensiv grünlich blau. Nach Abschalten der Spannung und Kurzschließen verschwand diese Färbung wieder, jedoch blieb die ursprüngliche Basis-Blaufärbung zurück. Diese blaue Restfärbung nahm im Verlauf von mehreren Tagen beim bloßen Liegenlassen oder auch beim Betrieb unter Spannung stetig zu.

### Beispiel 8 (Temperaturtest)

Es wurden die Zellen der Beispiele 1 bis 4 und 6 und 7 in einem Wärmeschrank 1 bis 3 h bei 105°C gelagert. Die Ergebnisse sind der folgenden Tabelle zu entnehmen:

| Zelle | 1 h | | 3 h | |
|---|---|---|---|---|
| | Farbe | Dichtigkeit | Farbe | Dichtigkeit |
| Beispiel 1 | farblos | dicht | farblos | dicht |
| Beispiel 2 | farblos | dicht | farblos | dicht |
| Beispiel 3 | farblos | dicht | farblos | dicht |
| Beispiel 4 | farblos | dicht | farblos | dicht |
| Beispiel 6 | blau | ausgelaufen | - | - |
| Beispiel 7 | blau | dicht | blau | ausgelaufen |

### Beispiel 9

a) Unter Stickstoffatmosphäre wurden 9,2 g Phenazin in 60 ml wasserfreiem Tetrahydrofuran suspendiert. Während 15 min tropften 30,8 ml 20 gew.-%ige Phenyllithiumlösung in Cyclohexan/Diethylether 7 : 3 dazu, wobei die Temperatur bei max. 35°C gehalten wurde. Die Lösung wurde 30 min bei Raumtemperatur nachgerührt.
   Bei 15°C wurden in einer Portion 30,2 ml 1,4-Dibrombutan dazugegeben. Die Temperatur stieg dabei bis 38°C an. Nach 6 h bei Raumtemperatur wurde mit 200 ml Wasser versetzt und der pH auf 7,0 gestellt. Die organische Phase wurde abgetrennt, dreimal mit je 100 ml Wasser gewaschen und im Vakuum eingeengt. Schließlich wurde überschüssiges 1,4-Dibrombutan bei einem Druck von 0,2 mbar abdestilliert. Der ölige Rückstand wurde in 400 ml Ethanol heiß gelöst. Das nach dem Erkalten ausgefalfene Produkt wurde abgesaugt, mit Ethanol und Hexan gewaschen und getrocknet. Man erhielt 8,0 g (41 % d. Th.) blaßgelbes Pulver des 9.10-Dihydrophenazins der Formel 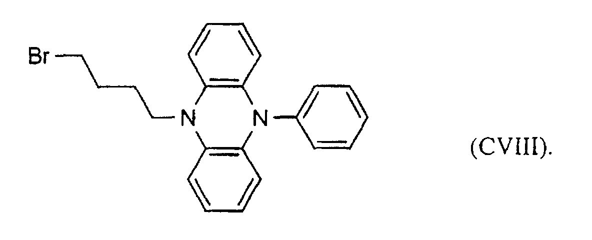
b) 7,5 g des 9,10-Dihydrophenazins der Formel (CVIII) aus a) und 6,1 g 4.4'-Dipyridyl wurden in 100 ml Acetonitril 24 h bei 70°C unter Stickstoffatmosphäre gerührt. Nach dem Abkühlen wurde abgesaugt und mit 50 ml Aceton gewaschen. Nach dem Trocknen erhielt man 6,3 g (60 % d. Th.) des Salzes der Formel 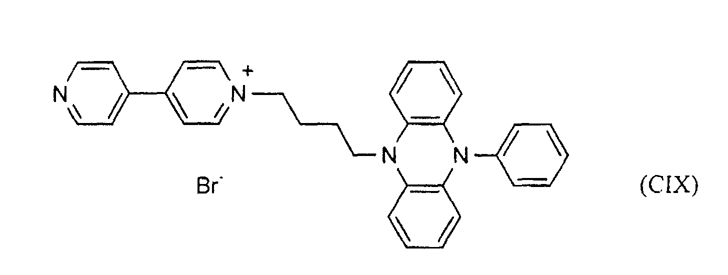
c) 6,1 g des unter b) erhaltenen Salzes wurden in 70 ml N-Methyl-2-pyrrolidon zusammen mit 2,7 ml Benzylbromid 7 h bei 70°C unter Stickstoffatmosphäre gerührt. Nach dem Abkühlen wurde mit 150 ml Toluol verdünnt und das ausgefallene Produkt abgesaugt. Es wurde gründlich mit 150 ml Toluol und 500 ml Hexan gewaschen und getrocknet. Man erhielt 5,5 g (69 % d. Th.) des Dipyridiniumsalzes der Formel 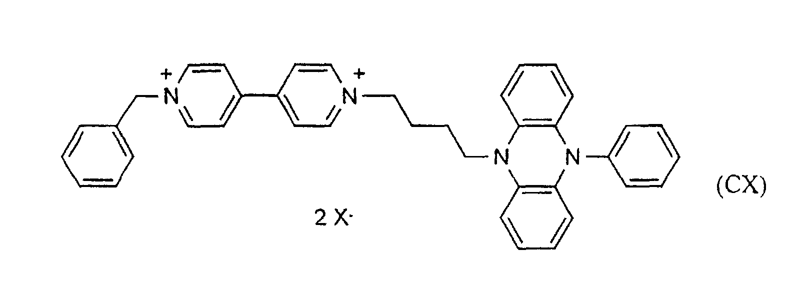 mit X⁻=Br⁻.
d) 4,0 g dieses Produkts aus c) wurden unter Stickstoffatmosphäre in 100 ml Methanol bei 65°C gelöst. Während 5 min wurden 7,4 g Tetrabutylammoniumtetrafluoroborat eingestreut. Es trat eine Fällung auf. Nach 5 min bei 65°C wurde abgekühlt, abgesaugt, mit 200 ml Methanol und 50 ml Hexan gewaschen und im Vakuum getrocknet. Man erhielt 3,4 g (83 % d. Th.) blaß beiges Pulver der Formel (CX) mit X- = BF₄- (= CVI)
   In einer elektrochromen Vorrichtung gemäß Beispiel 1 bis 5 wurde eine grünlich-blaue Färbung mit ₘₐₓ = 466 und 607 nm erzielt

## Patentansprüche

1. Elektrochrome Vorrichtung, bestehend aus einem Paar transparent und leitfähig beschichteter Glas- oder Kunststoffplatten (1,4;11,17), von denen eine verspiegelt sein kann und von denen bei einer der beiden Platten oder auch bei beiden die leitfähige Schicht in getrennte, einzeln elektrisch kontaktierte Segmente (14), aufgeteilt sein kann, die über eine Klebstoffraupe (2;15), in die Abstandshalter eingebettet sein können, auf den Seiten ihrer leitfähigen Beschichtung zusammengefügt sind, und bei der das Volumen gebildet aus den beiden Platten und der Klebstoffraupe mit einer elektrochromen Flüssigkeit gefüllt ist und bei der die zum Einfüllen der elektrochromen Flüssigkeit nötige(n) Befüllöffnung oder Befüllöffnungen (3;16) nach dem Befüllen mit einem Klebstoff verschlossen ist, **dadurch gekennzeichnet, daß** die Klebstoffraupe zum Bau der elektrochromen Vorrichtung aus einem thermisch oder photochemisch oder nach photochemischer Initiierung thermisch gehärteten Epoxi-Kleber besteht und daß der Klebstoff zum Verschluß ein photochemisch gehärteter Acrylatkleber oder ein photochemisch oder nach photochemischer Initiierung bei Raumtemperatur gehärteter Epoxikleber ist.

2. Elektrochrome Vorrichtung nach Anspruch 1, wobei der Epoxi-Kleber ein Einkomponentenkleber ist.

3. Elektrochrome Vorrichtung nach Anspruch 1, wobei der Epoxi-Kleber eine epoxidische Verbindung, eine aminische Verbindung und eine verkappte Lewis-Säure oder eine verkappte Brøansted-Säure enthält, die unter Wärme- oder Lichteinwirkung eine Lewis- oder Brønsted-Säure- oder Lewis- oder Brønsted-Base-Verbindung freisetzt.

4. Elektrochrome Vorrichtung nach Anspruch 3, wobei im Epoxi-Kleber die epoxidische Komponente ein Epoxid der Formel 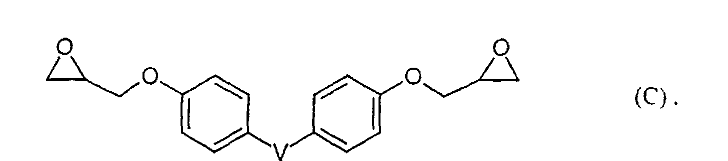 enthält, worin
V für eine Brücke steht, die ebenfalls Epoxigruppen tragen kann und die aminische Komponente ein primäres oder sekundäres aliphatisches, cycloaliphatisches, aromatisches, araliphatisches oder heterocyclisches, mindestens bifunktionelles Amin ist
und die Lewis-Säure-Verbindung, die in verkappter Form vorliegt, ein Nichtmetallhalogenid ist und die Brønsted-Säure-Verbindung, die in verkappter Form vorliegt, eine starke Protonensäure ist, die sich von Nichtmetallhalogeniden ableitet.

5. Elektrochrome Vorrichtung nach Anspruch 1, wobei der Epoxi-Kleber für die Klebstoffraupe Abstandshalter enthält.

6. Elektrochrome Vorrichtung nach Anspruch 1, wobei der Epoxi-Kleber für die Klebstoffraupe Abstandshalter mit einem Durchmesser von 0,005 bis 2 mm aus der Gruppe der Glaskugeln, Kunststoffkugeln, Sande und Siliciumcarbidkugeln enthält.

7. Elektrochrome Vorrichtung nach Anspruch 1, wobei der Acrylatkleber eine Verbindung der Formel 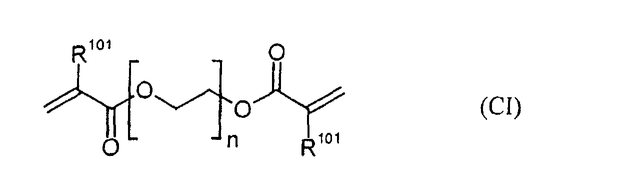 worin
n für eine ganze Zahl von 0 bis 20, vorzugsweise 0 bis 10 steht und
R¹⁰¹ für Wasserstoff oder Methyl steht,
oder der Formel 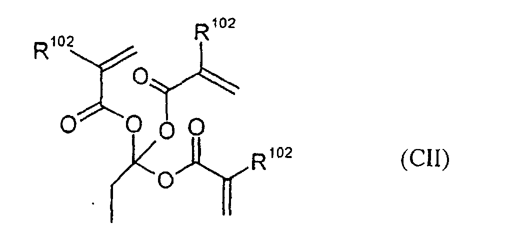 worin
R¹⁰² für Wasserstoff oder Methyl steht,
enthält.

8. Elektrochrome Vorrichtung nach Anspruch 1, wobei die Viskosität der Kleber > 10.000 mPas beträgt.

9. Elektrochrome Vorrichtung nach Anspruch 1, wobei die elektrochrome Flüssigkeit mindestens eine oxidierbare Substanz RED₁, die durch Elektronenabgabe an einer Anode, und mindestens eine reduzierbare Substanz OX₂, die durch Elektronenaufnahme an einer Kathode, jeweils unter Zunahme der Extinktion im sichtbaren Bereich des Spektrums von einer schwach gefärbten oder farblosen Form in eine gefärbte Form OX₂ bzw. RED₁ übergeht, wobei nach Ladungsausgleich jeweils die schwach gefärbte bzw. farblose Form zurückgebildet wird, enthält.

10. Elektrochrome Vorrichtung nach Anspruch 9, wobei mindestens eine der in der elektrochromen Lösung enthaltenen Substanzen RED₁ und OX₂ über eine Brücke kovalent miteinander verknüpft sind.

11. Verfahren zur Herstellung der elektrochromen Vorrichtung nach Anspruch 1, wobei auf eine der Platten (1) auf der leitfähig beschichteten Seite ein erfindungsgemäßer Kleber, der Abstandshalter enthält, so aufgebracht wird, daß eine Klebstoffraupe (2) entsteht, die mindestens eine Einfüllöffnung (3) freiläßt, die zweite Platte (4) mit der Seite ihrer leitfähigen Beschichtung auf die Klebstoffraupe gelegt und angedrückt wird, der Kleber thermisch, photochemisch oder photochemisch initiiert thermisch ausgehärtet wird, unter Inertgasatmosphäre die Zelle über die Einfüllöffnungen (3) mit der elektrochromen Flüssigkeit, die selbst sauerstofffrei ist und entweder entgast oder mit dem Inertgas beaufschlagt ist, befüllt wird, und die Öffnungen (3) mit dem für den Zellenverschluß vorgesehenen Klebstoff verschlossen werden, der allein mit Licht oder aber durch Licht initiiert bei Raumtemperatur ausgehärtet wird.

12. Verwendung der elektrochromen Vorrichtung nach Anspruch 1 in Form von Fensterscheiben, Trennscheiben, Sichtschutzscheiben.

13. Verwendung der elektrochromen Vorrichtung nach Anspruch 1 in Form von Autospiegeln.

14. Verwendung der elektrochromen Vorrichtung nach Anspruch 1 in Form von Segment- oder Matrixanzeige.

## Claims

1. Electrochromic device comprising a pair of transparently and conductively coated glass or plastic plates (1, 4; 11, 17), of which one may be mirrored and of which the conductive layer of one of the two plates or else of both can be subdivided into separate, individually electrically contacted segments (14) which are joined together on the sides of their conductive coating by an adhesive bead (2; 15) into which spacers may be embedded, and where the volume formed from the two plates and the adhesive bead is filled with an electrochromic fluid and where the filling aperture or apertures (3; 16) required for introduction of the electrochromic fluid is or are seated with an adhesive after filling has taken place, **characterized in that** the adhesive bead for constructing the electrochrornic device comprises a thermally or photochemically cured epoxy adhesive, or an epoxy adhesive cured thermally after photochemical initiation, and **in that** the adhesive for sealing is a photochemically cured acrylate adhesive or an epoxy adhesive cured photochemically or following photochemical initiation at room temperature.

2. Electrochromic device according to Claim 1, in which the epoxy adhesive is a one-component adhesive.

3. Electrochromic device according to Claim 1, in which the epoxy adhesive comprises an epoxide compound, an aminic compound and a capped Lewis acid or a capped Brønsted acid which on exposure to heat or light releases a Lewis or Brønsted acid or Lewis or Brønsted base compound.

4. Electrochromic device according to Claim 3, in which in the epoxy adhesive the epoxide component comprises an epoxide of the formula 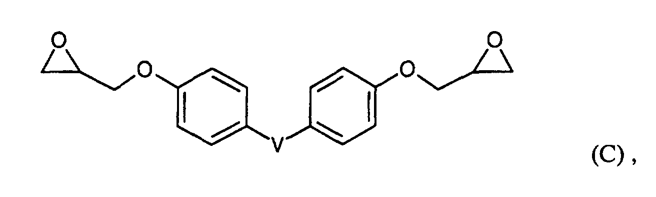 in which
V represents a bridge, which may likewise carry epoxy groups,
and the aminic component is a primary or secondary aliphatic, cycloaliphatic, aromatic, araliphatic or heterocyclic, at least bifunctional amine and the Lewis acid compound, which is in capped form, is a non-metal halide and the Brønsted acid compound, which is in capped form, is a strong protic acid which is derived from non-metal halides.

5. Electrochromic device according to Claim 1, in which the epoxy adhesive for the adhesive bead comprises spacers.

6. Electrochromic device according to Claim 1, in which the epoxy adhesive for the adhesive bead comprises spacers having a diameter of from 0.005 to 2 mm from the group consisting of glass beads, plastic beads, sands and silicon carbide beads.

7. Electrochromic device according to Claim 1, in which the acrylate adhesive comprises a compound of the formula 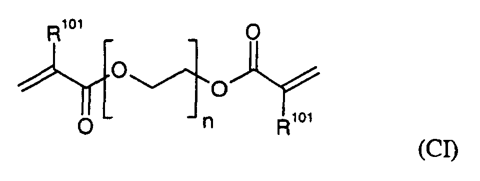 in which
n represents an integer from 0 to 20, preferably from 0 to 10, and
R¹⁰¹ represents hydrogen or methyl
or of the formula 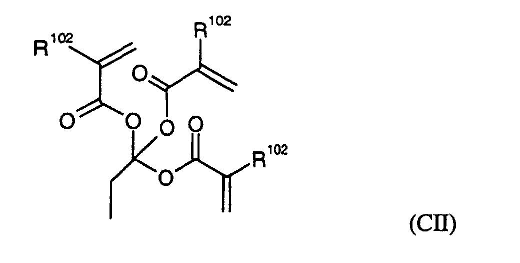 in which
R¹⁰² represents hydrogen or methyl.

8. Electrochromic device according to Claim 1, in which the viscosity of the adhesives is > 10,000 mPas.

9. Electrochromic device according to Claim 1, in which the electrochromic fluid comprises at least one oxidizable substance RED₁, which releases electrons at an anode, and at least one reducible substance OX₂, which accepts electrons at a cathode, and in so doing undergo transition from a weakly coloured or colourless form into a coloured form OX₂ and RED₁, respectively, in each case accompanied by an increase in the absorbance in the visible region of the spectrum, the weakly coloured or colourless form being restored after charge equalization.

10. Electrochromic device according to Claim 9, in which at least one of the substances RED₁ and OX₂ that are present in the electrochromic solution is covalently linked to the other via a bridge.

11. Process for producing the electrochromic device according to Claim 1, in which an adhesive of the invention which comprises spacers is applied to the conductively coated side of one of the plates (1) in such a way as to give an adhesive bead (2) which leaves at least one filling aperture (3) open, the second plate (4) is placed with the side of its conductive coating onto the bead of adhesive and is pressed on, the adhesive is subjected to thermal or photochemical curing or thermal curing with photochemical initiation, under an inert gas atmosphere the cell is filled via the filling apertures (3) with the electrochromic fluid, which itself is free from oxygen and has either been degassed or charged with the inert gas, and the apertures (3) are sealed with the adhesive which is intended for cell sealing and is cured with light alone or else at room temperature with initiation by light.

12. Use of the electrochromic device according to Claim 1 in the form of window panes, separating screens, see-through protective screens.

13. Use of the electrochromic device according to Claim 1 in the form of car mirrors.

14. Use of the electrochromic device according to Claim 1 in the form of a segmented or matrix display.

## Revendications

1. Dispositif électrochrome consistant en une paire de plaques de verre ou de résine synthétique transparente portant un revêtement conducteur (1, 4 ; 11, 17) dont l'une peut être argentée, la couche conductrice pouvant, pour l'une des deux plaques ou même pour les deux, être divisée en segments séparés (14) en contact électrique individuel, qui sont joints sur les faces de leur revêtement conducteur par un cordon de colle (2 ; 15) dans lequel des écarteurs peuvent être noyés, le volume formé par les deux plaques et le cordon de colle étant garni d'un liquide électrochrome et l'orifice ou les orifices de remplissage (3 ; 16) nécessaires pour introduire le liquide électrochrome étant fermés par une colle après remplissage, ce dispositif se caractérisant en ce que le cordon de colle servant à la construction du dispositif électrochrome consiste en une colle époxydique qui a subi un durcissement thermique ou photochimique ou un durcissement thermique après induction photochimique et en ce que la colle servant à l'obturation est une colle d'acrylate ayant un durcissement photochimique ou une colle époxydique ayant subi un durcissement photochimique ou un durcissement à température ambiante après induction photochimique.

2. Dispositif électrochrome selon la revendication 1, pour lequel la colle époxydique est une colle à un composant.

3. Dispositif électrochrome selon la revendication 1, pour lequel la colle époxydique est un composé époxydique, un composé aminique ou un acide de Lewis bloqué ou un acide de Bronsted bloqué, qui libère sous l'action de chaleur ou de la lumière un acide de Lewis ou de Bronsted ou un composé basique de Lewis ou de Bronsted.

4. Dispositif électrochrome selon la revendication 3, pour lequel, dans la colle époxydique, le composant époxydique contient un époxyde de formule 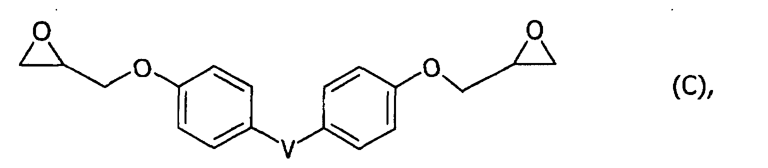 dans laquelle
V représente un pont qui peut également porter des groupes époxy et le composant aminique est une amine primaire ou secondaire, aliphatique, cycloaliphatique, aromatique, araliphatique ou hétérocyclique au moins bifonctionnelle,
et le composé acide de Lewis qui est à l'état bloqué, est un halogénure de non-métal et le composé acide de Bronsted qui est à l'état bloqué est un acide protonique fort dérivant d'halogénures de non-métaux.

5. Dispositif électrochrome selon la revendication 1, pour lequel la colle époxydique pour le cordon de colle contient des écarteurs.

6. Dispositif électrochrome selon la revendication 1, pour lequel la colle époxydique pour le cordon de colle contient des écarteurs d'un diamètre de 0,005 à 2 mm choisis parmi les billes de verre, les billes de résine synthétique, les sables et les billes de carbure de silicium.

7. Dispositif électrochrome selon la revendication 1, pour lequel la colle d'acrylate contient un composé de formule 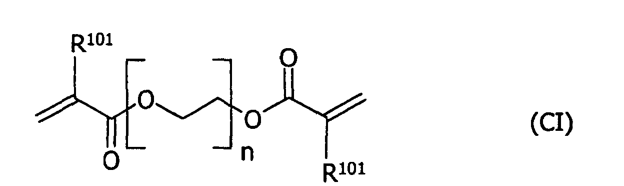 dans laquelle
n est un nombre entier allant de 0 à 20, de préférence de 0 à 10 et
R¹⁰¹ représente l'hydrogène ou un groupe méthyle,
ou de formule 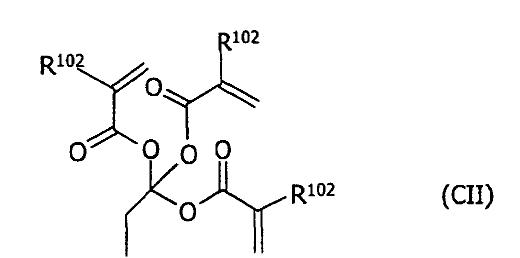 dans laquelle
R¹⁰² représente l'hydrogène ou un groupe méthyle.

8. Dispositif électrochrome selon la revendication 1, pour lequel la viscosité des colles est supérieure à 10 000 mPas.

9. Dispositif électrochrome selon la revendication 1, pour lequel le liquide électrochrome contient au moins une substance oxydable RED₁ qui, par une libération d'électrons à une anode, et au moins une substance réductible OX₂ qui, par absorption d'électrons à une cathode, passent chacune, avec augmentation de l'extinction dans le domaine visible du spectre, d'une forme peu colorée ou incolore à une forme colorée OX₂ et RED₁ respectivement, la forme faiblement colorée ou incolore se reformant dans chaque cas après équilibrage des charges.

10. Dispositif électrochrome selon la revendication 9, pour lequel au moins une des substances RED₁ et OX₂ contenues dans la solution électrochrome sont reliées entre elles par un pont covalent.

11. Procédé pour la préparation du dispositif électrochrome selon la revendication 1, dans lequel, sur l'une des plaques (1), sur la face à revêtement conducteur, on applique une colle selon l'invention contenant des écarteurs de manière à former un cordon de colle (2), en laissant libre au moins un orifiçe de remplissage (3), on couche la deuxième plaque (4) avec la face portant le revêtement conducteur sur le cordon de colle et on presse, on soumet la colle à durcissement thermique, photochimique ou thermique avec induction photochimique, on garnit la cellule, en atmosphère de gaz inerte, par les orifices de remplissage (3), du liquide électrochrome qui est exempt d'oxygène et est dégazé ou en atmosphère de gaz inerte et on ferme les orifices (3) par la colle prévue pour l'obturation de la cellule, laquelle durcit uniquement à la lumière ou à température ambiante avec induction par la lumière.

12. Utilisation du dispositif électrochrome selon la revendication 1, sous la forme de vitres de fenêtre, glaces de séparation, lunettes de protection.

13. Utilisation du dispositif électrochrome selon la revendication 1, sous la forme de miroirs pour l'automobile.

14. Utilisation du dispositif électrochrome selon la revendication 1, sous la forme d'affichages à segments ou à matrice.
